(19) Europäisches Patentamt / European Patent Office / Office européen des brevets

(11) **EP 2 046 458 B1**

(12) **EUROPEAN PATENT SPECIFICATION**

(45) Date of publication and mention
of the grant of the patent:
**19.06.2013 Bulletin 2013/25**

(51) Int Cl.:
*A62B 7/00* *(2006.01)*     *D04H 3/14* *(2012.01)*
*D04H 3/16* *(2006.01)*     *A41D 13/11* *(2006.01)*
*A62B 23/02* *(2006.01)*

(21) Application number: **07872253.5**

(22) Date of filing: **17.07.2007**

(86) International application number:
**PCT/US2007/073650**

(87) International publication number:
**WO 2008/085546 (17.07.2008 Gazette 2008/29)**

(54) **FLAT-FOLD RESPIRATOR WITH MONOCOMPONENT FILTRATION/STIFFENING MONOLAYER**

FLACHGEFALTETE ATEMMASKE MIT EINTEILIGER FILTRIERUNGS-/VERSTEIFUNGS-MONOSCHICHT

RESPIRATEUR REPLIÉ À PLAT AVEC MONOCOUCHE DE FILTRATION/RIGIDIFICATION À UN COMPOSANT

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **31.07.2006 US 461128**
**31.07.2006 US 461136**
**31.07.2006 US 461145**
**31.07.2006 US 461192**
**31.07.2006 US 461201**
**29.03.2007 US 693186**

(43) Date of publication of application:
**15.04.2009 Bulletin 2009/16**

(73) Proprietor: **3M Innovative Properties Company**
**Saint Paul, MN 55133-3427 (US)**

(72) Inventors:
• **ANGADJIVAND, Seyed A.**
**Saint Paul, Minnesota 55133-3427 (US)**
• **SPRINGETT, James E.**
**Webster, Wisconsin 54893 (US)**
• **BRANDNER, John M.**
**Saint Paul, Minnesota 55133-3427 (US)**
• **JONES, Marvin E.**
**Saint Paul, Minnesota 55133-3427 (US)**
• **FOX, Andrew R.**
**Saint Paul, Minnesota 55133-3427 (US)**
• **BERRIGAN, Michael R.**
**Saint Paul, Minnesota 55133-3427 (US)**
• **STELTER, John D.**
**Saint Paul, Minnesota 55133-3427 (US)**

(74) Representative: **Isarpatent**
**Patent- und Rechtsanwälte**
**Postfach 44 01 51**
**80750 München (DE)**

(56) References cited:
KR-B1- 100 282 860     US-A- 5 582 907
US-A- 5 753 736     US-B1- 6 183 670
US-B1- 6 394 090     US-B1- 6 394 090
US-B2- 6 770 356     US-B2- 7 069 930

## Description

This invention relates to flat-fold respirators that are worn by persons to protect them from inhaling airborne contaminants.

## Background

Personal respirators are commonly used to protect a wearer from inhaling particles suspended in the air or from breathing unpleasant or noxious gases. Respirators generally come in one of two types - a molded cup-shaped form or a flat-folded form. The flat-folded form has advantages in that it can be carried in a wearer's pocket until needed, unfolded for use, and re-folded flat for storage. Commercially-available flat-fold respirators typically use a stiffening member (e.g., a resilient supporting framework or other supporting element, see, for example, U.S. Patent No. 4,300,549 to Parker) or a stiffening layer (e.g., a high basis weight nonwoven web that contains large diameter, high modulus fibers such as polyester fibers, see, for example, U.S. Patent No. 6,123,077 to Bostock et al.) to impart greater structural stability to the unfolded respirator. The stiffening member or stiffening layer can help the respirator resist deflection during breathing cycles to discourage or prevent the wearer's lips and nostrils from contacting the respirator inner surface.

## Summary of the Invention

Although stiffening members and stiffening layers are beneficial in that they improve the structural integrity of a respirator, the use of such components can undesirably increase overall respirator weight, bulk and cost. Because stiffening members and stiffening layers do not provide significant filtration capabilities, and limit the extent to which unused manufacturing scrap can be recycled, applicants sought to eliminate these components from a flat-fold respirator. Some patents say that a stiffening member or stiffening layer is merely optional or preferred (see e.g., the above-mentioned U.S. Patent No. 6,123,077 and U.S> Patent No. 4,920,960 to Hubbard et al.). It is difficult in practice to eliminate these components because their removal makes the respirator undesirably flimsy when unfolded and worn.

Applicants have now found a way to provide both stiffening and filtration capabilities in a single layer so that a flat-fold respirator can be fashioned which has one or more of reduced weight, bulk and manufacturing cost.

The invention provides in one aspect a flat-fold personal respirator according to claim 1. The respirator is capable of being folded to a substantially flat-folded configuration and unfolded to a convex open configuration.

In another aspect the invention provides a process for making a flat-fold personal respirator according to claim 9.

Product complexity and waste may be reduced by eliminating a separate stiffening layer and by potentially eliminating other layers such as an outer cover web layer. Also, if the stiffening layer fibers and the fibers of any other layer (such as an inner or outer cover web layer) in the respirator all have the same polymeric composition and extraneous bonding materials are not employed, unused scrap may be recovered and fully recycled to make additional starting material.

## Brief Description of the Drawing

**Fig. 1** is a side view of a flat fold respirator 10 in accordance with the present invention;

**Fig. 2** is a front view of the flat fold respirator 10 of Fig. 1 shown in an open, ready-to-use configuration;

**Fig. 3** is a schematic illustration of an exemplary manufacturing process for making flat-fold respirators in accordance with the present invention;

**Fig. 4** is a schematic illustration of a preform **146** made using the process of Fig. 3 in accordance with the present invention;

**Fig. 5** is a front view of another embodiment of a flat fold respirator **160** in accordance with the present invention in its flat-fold configuration;

**Fig. 6** is a front view of the flat fold respirator **160** of **Fig. 5** in its open, ready-to-use configuration in accordance with the present invention;

**Fig. 7** is a schematic cross-sectional view of an exemplary process for making a stiff monocomponent monolayer web **264,** in accordance with the present invention, using a meltblowing die **202** whose orifices **246** and **248** are supplied with polymers of the same polymeric composition flowing at different rates or with different viscosities;

**Fig. 8** is an outlet end view of an exemplary meltblowing die for use in the process of **Fig. 7;**

**Fig. 9** is a schematic cross-sectional view of an exemplary process for making a stiff monocomponent monolayer web **320,** in accordance with the present invention, using a meltblowing die having a plurality of larger and smaller orifices;

**Fig. 10** is an outlet end perspective view of an exemplary meltblowing die for use in the process of **Fig. 9;**

**Fig. 11** is a schematic side view of an exemplary process for making a stiff monocomponent monolayer web using meltspinning and a quenched forced-flow heater;

**Fig. 12** is a perspective view of a heat-treating part of the apparatus shown in **Fig. 11;** and

**Fig. 13** is a schematic enlarged and expanded view of the apparatus of **Fig. 12.**

Like reference symbols in the various figures of the drawing indicate like elements. The elements in the drawing are not to scale.

## Detailed Description

As used in this document, the terms provided below will have the meaning as given:

"Attenuating the filaments into fibers" means the conversion of a segment of a filament into a segment of greater length and smaller size.

"Bimodal mass fraction/fiber size mixture" means a collection of fibers having a histogram of mass fraction vs. fiber size in $\mu$m exhibiting at least two modes. A bimodal mass fraction/fiber size mixture may include more than two modes, for example it may be a trimodal or higher-modal mass fraction/fiber size mixture.

"Bimodal fiber count/fiber size mixture" means a collection of fibers having a histogram of fiber count (frequency) vs. fiber size in $\mu$m exhibiting at least two modes whose corresponding fiber sizes differ by at least 50% of the smaller fiber size. A bimodal fiber count/fiber size mixture may include more than two modes, for example it may be a trimodal or higher-modal fiber count/fiber size mixture.

"Bonding" when used with respect to a fiber or collection of fibers means adhering together firmly; bonded fibers generally do not separate when a web is subjected to normal handling.

"Charged" when used with respect to a collection of fibers means fibers that exhibit at least a 50% loss in Quality Factor **QF** (discussed below) after being exposed to a 20 Gray absorbed dose of 1 mm beryllium-filtered 80 KVp X-rays when evaluated for percent dioctyl phthalate ( % DOP) penetration at a face velocity of 7 cm/sec.

"Continuous" when used with respect to a fiber or collection of fibers means fibers having an essentially infinite aspect ratio (*viz.*, a ratio of length to size of e.g., at least about 10,000 or more).

"Effective Fiber Diameter" (EFD) when used with respect to a collection of fibers means the value determined according to the method set forth in Davies, C. N., "The Separation of Airborne Dust and Particles", Institution of Mechanical Engineers, London, Proceedings 1B, 1952 for a web of fibers of any cross-sectional shape be it circular or non-circular.

"Filtration panel" means a portion of a fold-flat respirator having filtration capabilities sufficient to remove one or more airborne small particle contaminants and having one or more discernible boundaries when the respirator is unfolded for use.

"Flat-fold respirator" means a device that can be folded flat for storage, can be unfolded to a shape that fits over at least the nose and mouth of a person and removes one or more airborne contaminants when worn by such person.

"Line of demarcation" means a fold, seam, weld, bond or other visible feature that provides a discernible boundary and optionally a hinge region for a respirator filtration panel.

"Meltblown" when used with respect to a nonwoven web means a web formed by extruding a fiber-forming material through a plurality of orifices to form filaments while contacting the filaments with air or other attenuating fluid to attenuate the filaments into fibers and thereafter collecting a layer of the attenuated fibers.

"Meltblown fibers" means fibers prepared by extruding molten fiber-forming material through orifices in a die into a high-velocity gaseous stream, where the extruded material is first attenuated and then solidifies as a mass of fibers. Meltblown fibers generally are not oriented. Although meltblown fibers have sometimes been reported to be discontinuous, the fibers generally are long and entangled sufficiently that it is usually not possible to remove one complete meltblown fiber from a mass of such fibers or to trace one meltblown fiber from beginning to end.

"Meltspun" when used with respect to a nonwoven web means a web formed by extruding a low viscosity melt through a plurality of orifices to form filaments, quenching the filaments with air or other fluid to solidify at least the surfaces of the filaments, contacting the at least partially solidified filaments with air or other fluid to attenuate the filaments into fibers and collecting a layer of the attenuated fibers.

"Meltspun fibers" means fibers issuing from a die and traveling through a processing station in which the fibers are permanently drawn and polymer molecules within the fibers are permanently oriented into alignment with the longitudinal axis of the fibers. Such fibers are essentially continuous and are entangled sufficiently that it is usually not possible to remove one complete meltspun fiber from a mass of such fibers.

"Microfibers" means fibers having a median size (as determined using microscopy) of 10 $\mu$m or less; "ultrafine microfibers" means microfibers having a median size of two $\mu$m or less; and "submicron microfibers" means microfibers having a median size one $\mu$m or less. When reference is made herein to a batch, group, array, etc. of a particular kind of microfiber, e.g., "an array of submicron microfibers," it means the complete population of microfibers in that array, or the complete population of a single batch of microfibers, and not only that portion of the array or batch that is of submicron dimensions.

"Mode" when used with respect to a histogram of mass fraction vs. fiber size in $\mu$m or a histogram of fiber count (frequency) vs. fiber size in $\mu$m means a local peak whose height is larger than that for fiber sizes 1 and 2 $\mu$m smaller and 1 and 2 $\mu$m larger than the local peak.

"Monocomponent" when used with respect to a fiber or collection of fibers means fibers having essentially the same composition across their cross-section; monocomponent includes blends (*viz.*, polymer alloys) or additive-containing materials, in which a continuous phase of uniform composition extends across the cross-section and over the length of the fiber.

"Monolayer" when used with respect to a nonwoven web means having (other than with respect to fiber size) a generally uniform distribution of similar fibers throughout a cross-section of the web, and having (with respect to fiber size) fibers representing each modal population present throughout a cross-section of the web. Such a monolayer web may have a generally uniform distribution of fiber sizes throughout a cross-section of the web or may, for example, have a depth gradient of fiber sizes such as a preponderance of larger size fibers proximate one major face of the web and a preponderance of smaller size fibers proximate the other major face of the web.

"Nominal Melting Point" means the peak maximum of a second-heat, total-heat-flow differential scanning calorimetry (DSC) plot in the melting region of a polymer if there is only one maximum in that region; and, if there is more than one maximum indicating more than one melting point (e.g., because of the presence of two distinct crystalline phases), as the temperature at which the highest-amplitude melting peak occurs.

"Nonwoven web" means a fibrous web characterized by entanglement or point bonding of the fibers.

"Of the same polymeric composition" means polymers that have essentially the same repeating molecular unit, but which may differ in molecular weight, melt index, method of manufacture, commercial form, etc., and which may optionally contain minor amounts (e.g., less than about 3 wt. %) of an electret charging additive.

"Oriented" when used with respect to a polymeric fiber or collection of such fibers means that at least portions of the polymeric molecules of the fibers are aligned lengthwise of the fibers as a result of passage of the fibers through equipment such as an attenuation chamber or mechanical drawing machine. The presence of orientation in fibers can be detected by various means including birefringence measurements and wide-angle x-ray diffraction.

"Porous" means air-permeable.

"Separately prepared smaller size fibers" means a stream of smaller size fibers produced from a fiber-forming apparatus (e.g., a die) positioned such that the stream is initially spatially separate (e.g., over a distance of about 1 inch (25 mm) or more from, but will merge in flight and disperse into, a stream of larger size fibers.

"Self-supporting" when used with respect to a nonwoven web or panel means that the web or panel does not include a contiguous reinforcing layer of wire, mesh, or other stiffening material having a composition different from that of the web panel and providing increased stiffness to one or more portions of the web or panel.

"Size" when used with respect to a fiber means the fiber diameter for a fiber having a circular cross section, or the length of the longest cross-sectional chord that may be constructed across a fiber having a non-circular cross-section.

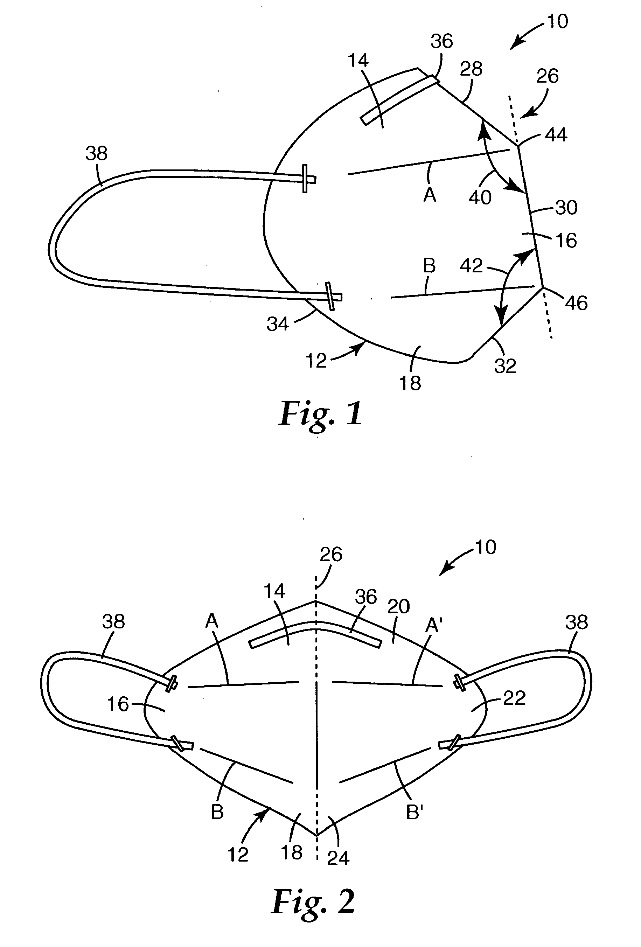

In the practice of the present invention, a variety of flat-fold personal respirators may be made using the stiff filtration panels described herein. One such flat-fold respirator is shown in **Fig. 1,** which illustrates a respirator **10** having first and second lines of demarcation **A** and **B. Fig. 2** shows a front view of device **10 in** an open ready-to-use configuration. Device **10** includes a main body **12** containing six filtration panels. Three of those panels are shown in **Fig. 1** as right upper panel **14,** right central panel **16** and right lower panel **18** (using the terms left, right, upper and lower in the wearer's sense). The remaining three panels are shown in **Fig. 2** as left upper panel **20,** left central panel **22** and left lower panel **24.** Vertical bisecting line **26** divides the left and right halves of device **10.** Panels **14** and **20** are connected through welded seam **28.** Panels **16** and **22** are connected through central vertical fold **30.** Panels **18** and **24** are connected through welded seam **32.** Panels **14** and **16** are connected through welded bondline **A,** which in this embodiment extends over part of but not the entire region between panels **14** and **16.** In similar fashion, panels **16** and **18** are connected through welded bondline **B,** panels **20** and **22** are connected through welded bondline **A'** and panels **22** and **24** are connected through welded bondline **B'.** One or more of panels **14, 16, 18, 20, 22** and **24** may be provided as separate components, and at least one, more preferably at least two and most preferably all of the filtration panels **14, 16, 18, 20, 22** and **24** is a stiff filtration panel as described in more detail below. When each of the filtration panels **14, 16, 18, 20, 22** and **24** is a stiff filtration panel, they preferably are formed in a single preform made from the disclosed monocomponent monolayer nonwoven web. The disclosed stiff filtration panel provides both airborne contaminant filtration and respirator stiffening properties in a single nonwoven layer exclusive of any inner or outer cover web layers which may also be present. Device **10** may be folded in half (e.g., for storage in a package prior to use or in a wearer's pocket) along line **26** which in this embodiment corresponds to fold **30.** Facial edge **34** is shaped to provide a suitable seal against the cheeks, chin and nose of a wearer. Device **10** preferably also includes additional components such as a reinforcing nosepiece **36** and attachments such as earloops **38.** Some wearers will prefer a device attached via one or two headbands (not shown in **Fig. 1** and **Fig. 2)** in place of earloops **38.** The shape and the size of device **10** may conveniently be varied by altering the shape or orientation of seams **28** and **32.** Seams **28** and **32** may for example be straight to curvilinear as desired to achieve good conformance to the wearer's face. The orientation of seams **28** and **32** may conveniently be defined by referring to first angle **40** and second angle **42,** which respectively are drawn with reference to fold **30** and first point of origin **44** or fold **30** and second point of origin **46**. First angle **40** may for example be about 110 degrees to about 175 degrees or about 140 degrees to about 155 degrees. Second angle **42** may for example be about 100 degrees to about 165 degrees or about 135 degrees to about 150 degrees. By varying the shape of seams **28** and **32**, first angle **40**, or second angle **42**, the conformance of device **10** to a wearer's face can be easily altered to accommodate various face sizes and shapes. Persons having ordinary skill in the art will appreciate that by varying the angles of each of first angle **40** and second angle **42**, the length of seams **28** and **32** and the size of device 1 welded, stitched or otherwise fastened 0 may change accordingly. Seams **28** and **32** may for example have a length of about 40 mm to about 80 mm, and need not necessarily have the same lengths. Aside from the stiff filtration panels, further details regarding respirators such as device **10** and their manufacture may be found in U.S. Patent No. 6,394,090 B1 (Chen et al.).

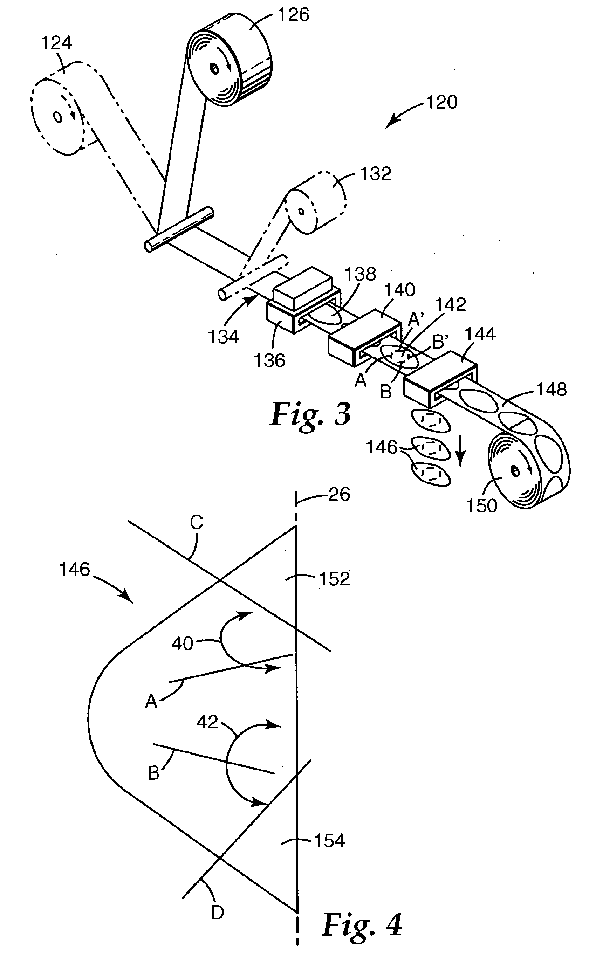

**Fig. 3** shows a schematic illustration of one production process **120** for manufacturing a flat-folded respiratory device like that shown in **Fig. 1** and **Fig. 2.** An optional inner cover web **124** and a stiff filtration layer **126** are preferably supplied in roll form for a substantially continuous process. To facilitate recycling of unused scrap, inner cover web **124** desirably is a monocomponent web of the same polymeric composition as stiff filtration layer **126**. For example, inner cover web **124** and stiff filtration layer **126** may both be polypropylene webs. Stiff filtration layer **126** may optionally be covered by an outer cover web **132**. If used, outer cover web **132** desirably is a monocomponent web of the same polymeric composition as inner cover web **124** and stiff filtration layer **126**. Desirably at least the eventual outer surface (*viz.*, the surface which will face away from the wearer in the completed respirator) of stiff filtration layer **126** is calendered, as that may discourage shedding sufficiently so that outer cover web **132** may be omitted. If both major surfaces of stiff filtration layer **126** are sufficiently calendared, shedding may be discouraged sufficiently so that both inner cover web **124** and outer cover web **132** may be omitted.

The resulting one-, two- or three-layer web assembly **134** may be held together by surface forces, electrostatic forces, thermal bonding, adhesive or other suitable measures that will be familiar to persons having ordinary skill in the art. Web assembly **134** can next be welded and trimmed at welding station **136** to form a partial preform **138**. Preform **138** desirably is substantially flat so that the desired respirator may be formed at relatively high rates of speed and relatively low cost without requiring specialized manufacturing equipment such as mating shell molds. Partial preform **138** next passes through demarcation station **140** where at least one line of demarcation is formed in partial preform **138** to create demarked preform **142**. The desired line or lines of demarcation may be formed by a variety of techniques including ultrasonic welding, application of pressure (with or without the presence of heat), stitching, application of adhesive bars, and the like. The demarked preform **142** shown in **Fig. 3** includes four lines of demarcation identified as **A, A', B,** and **B'**. The line or lines of demarcation may help prevent or discourage delamination of layers in the preform, may increase stiffness of one or more of the filtration panels during wear, and may improve flexibility at the boundaries between filtration panels when the respirator is unfolded for use or folded for storage. The demarked preforms **142** can next be advanced to cutting station **144** where completed preforms **146** are removed from web assembly **134** leaving perforated scrap portion **148** which may be wound up on take-up reel **150**. If the various layers in scrap portion **148** are webs having the same polymeric composition, then scrap portion **148** may immediately or at any convenient later stage be recovered and recycled (using for example pulverization devices, extruders or other recycling equipment that will be familiar to persons having ordinary skill in the art) so that it may be made into new starting material. The starting material may for example be used to make one or both of cover web **124** and stiff filtration layer **126**, with appropriate adjustment being made for the amount of electret charging additive if employed to make the filtration layer **126**.

Referring now to **Fig. 4**, the preform **146** may next be folded along bisecting fold **18**, then welded, stitched or otherwise fastened along lines **C** and **D** at predetermined angles **40** and **42** to form seams **28** and **32** (shown in **Fig. 1** and **Fig. 2)** which will affect the eventual size of device **10**. Preform **142** may also (e.g., before, during or after seams **28** and **32** are formed) be trimmed to remove waste portions **152** and **154**. If the various layers in waste portions **152** and **154** each have the same polymeric composition, then waste portions **152** and **154** may be recycled and made into new starting material as described above. Any other desired attachments may be affixed, and the completed respirator may be packaged in any convenient fashion including individual packaging and bulk packaging. Persons having ordinary skill in the art will appreciate that attachments such as nosepiece **36** may more conveniently be affixed at other stages of the manufacturing process. For example, a nosepiece may be positioned on an outer or an inner surface of either the inner cover web **124** or stiff filtration layer **126** before the webs are brought together, or on an inner or outer surface of preform **138** before the preform is cut from waste portion **148**, or on or inside preform **142** before or after seams **28** and **32** are formed.

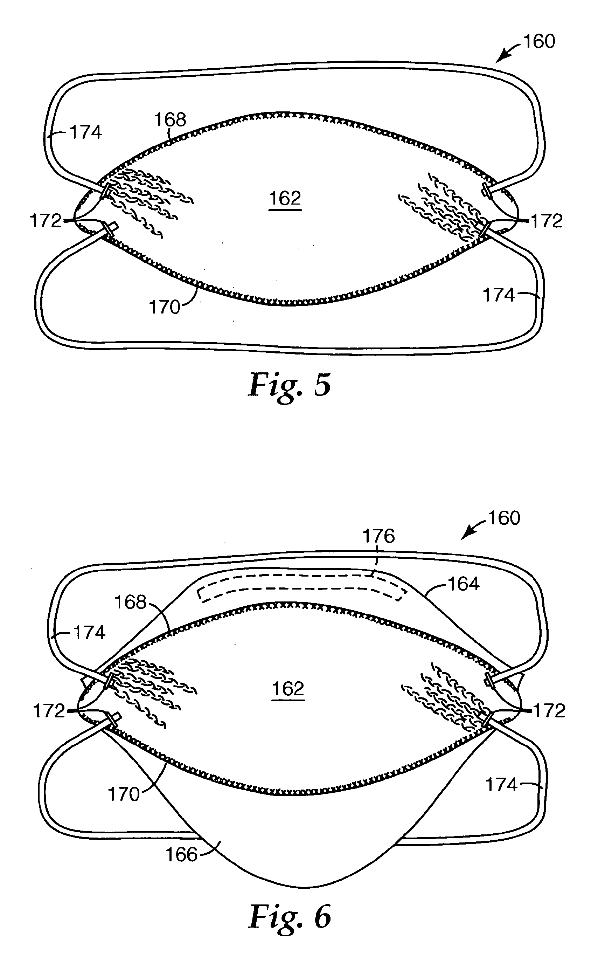

Another flat-fold respirator which may be formed from the disclosed stiff filtration panel is shown in **Fig. 5** and **Fig. 6**, which respectively show a device **160** in its flat-folded and unfolded, open ready-to-use configurations. Device **160** includes a central panel **162** which desirably is made from the disclosed stiff filtration web. Device **160** also includes upper panel **164** and lower panel **166** which may also be made from the disclosed stiff filtration web but desirably are made from a conventional rather than stiff filtration web. Panel **162** is respectively joined to panels **164** and **166** through seams **168** and **170**. Panel **162** desirably has a substantially elliptical shape and seams **168** and **170** desirably are curved or curvilinear in order to provide a respirator having comfortable fit characteristics including an off-the-face configuration. In the embodiment shown in **Fig. 5** and **Fig. 6,** the central panel **162,** upper panel **164** and lower panel **166** each are non-pleated. Device **160** may also include attachment points **172,** headband **174** and nose clip **176.** Further details regarding respirators like device **160** may be found in U.S. Patent No. 6,123,077 (Bostock et al.). Another exemplary embodiment of such a device includes a central panel made from the disclosed stiff filtration web and having a width of about 160 to 220 mm and a height of about 30 to 110 mm, the device being capable of being folded flat for storage with the upper panel or lower panel in at least partial face-to-face contact with a surface of the central panel and in contact with a portion of the lower panel or upper panel.

A variety of other flat-fold respirators may be formed from the disclosed stiff filtration web. Exemplary such respirators include those shown in U.S. Patent Nos. 2,007,867 (Le Duc), 2,265,529 (Kemp), 2,565,124 (Durborow), 2,634,724 (Burns), 2,752,916 (Haliczer), 3,664,335 (Boucher et al.), 3,736,928 (Andersson et al.), 3,971,369 (Aspelin et al.), 4,248,220 (White), 4,300,549 (Parker), 4,417,575 (Hilton et al.), 4,419,993 (Peterson), 4,419,994 (Hilton), 4,600,002 (Maryyanek et al.), 4,920,960 (Hubbard et al.), 5,322,061 (Brunson), 5,701,892 (Bledstein), 5,717,991 (Nozaki et al.), 5,724,964 (Brunson et al.), 5,735,270 (Bayer) and 6,474,336 B1 (Wolfe), and UK Patent Application No. GB 2 103 491 (American Optical Corporation).

The disclosed respirators may be pleated or non-pleated and desirably are non-pleated. The disclosed respirators may also include one or more molded portions or panels but desirably are made without requiring molding. The disclosed stiff filtration panel may represent a minority, majority or even all of the available respirator filtration area. The disclosed folds, seams, welds, bonds or other lines of demarcation may be straight, curved or curvilinear. In some embodiments containing multiple lines of demarcation, a line or lines of demarcation may intersect with another line or lines of demarcation. In other embodiments no line of demarcation will intersect with another line of demarcation. The disclosed respirators may have less than 20 mm $H_2O$ pressure drop when exposed to a 1 wt. % sodium chloride aerosol flowing at 95 liters/min. For example, they may have less than 10 mm $H_2O$ pressure drop. The disclosed respirators may also have less than 20% maximum penetration when exposed to a 1 wt. % sodium chloride aerosol flowing at 95 liters/min. For example, they may have less than 5% maximum loading penetration or less than 1% maximum loading penetration when exposed to a 0.075 $\mu$m 2% sodium chloride aerosol flowing at 85 liters/min.

A variety of polymeric fiber-forming materials may be used to prepare the disclosed stiff filtration webs. The polymer may be essentially any semicrystalline thermoplastic fiber-forming material that can be subjected to the chosen fiber and web formation process and that is capable of providing a charged nonwoven web that will maintain satisfactory electret properties or charge separation. Preferred polymeric fiber-forming materials are non-conductive semicrystalline resins having a volume resistivity of $10^{14}$ ohm-centimeters or greater at room temperature (22° C). Preferably, the volume resistivity is about $10^{16}$ ohm-centimeters or greater. Resistivity of the polymeric fiber-forming material may be measured according to standardized test ASTM D 257-93. The polymeric fiber-forming material also preferably is substantially free from components such as antistatic agents that could significantly increase electrical conductivity or otherwise interfere with the fiber's ability to accept and hold electrostatic charges. Some examples of polymers which may be used in chargeable webs include thermoplastic polymers containing polyolefins such as polyethylene, polypropylene, polybutylene, poly(4-methyl-1-pentene) and cyclic olefin copolymers, and combinations of such polymers. Other polymers which may be used but which may be difficult to charge or which may lose charge rapidly include polycarbonates, block copolymers such as styrenebutadiene-styrene and styrene-isoprene-styrene block copolymers, polyesters such as polyethylene terephthalate, polyamides, polyurethanes, and other polymers that will be familiar to those skilled in the art. The disclosed stiff filtration webs preferably are prepared from poly-4-methyl-1 pentene or polypropylene. Most preferably, the webs are prepared from polypropylene homopolymer because of its ability to retain electric charge, particularly in moist environments.

Additives may be added to the polymer to enhance the filtration web's performance, electret charging capability, mechanical properties, aging properties, coloration, surface properties or other characteristics of interest. Representative additives include fillers, nucleating agents (e.g., MILLAD™ 3988 dibenzylidene sorbitol, commercially available from Milliken Chemical), electret charging enhancement additives (e.g., tristearyl melamine, and various light stabilizers such as CHIMASSORB™ 119 and CHIMASSORB 944 from Ciba Specialty Chemicals), cure initiators, stiffening agents (e.g., poly(4-methyl-1-pentene)), surface active agents and surface treatments (e.g., fluorine atom treatments to improve filtration performance in an oily mist environment as described in U.S. Patent Nos. 6,398,847 B1, 6,397,458 B1, and 6,409,806 B1 to Jones et al.). The types and amounts of such additives will be familiar to those skilled in the art. For example, electret charging enhancement additives are generally present in an amount less than about 5 wt. % and more typically less than about 2 wt. %.

The disclosed stiff filtration web may have a variety of Effective Fiber Diameter values, for example an EFD of about 5 to about 40 $\mu$m, or of about 6 to about 35 $\mu$m. The web may also have a variety of basis weights, for example a basis weight of about 100 to about 500 grams/m$^2$ (gsm) or about 150 to about 250 gsm. The disclosed web may have a Gurley Stiffness value of at least about 200 mg, at least about 300 mg, at least about 400 mg, at least about 500 mg, at least about 1000 mg or at least about 2000 mg.

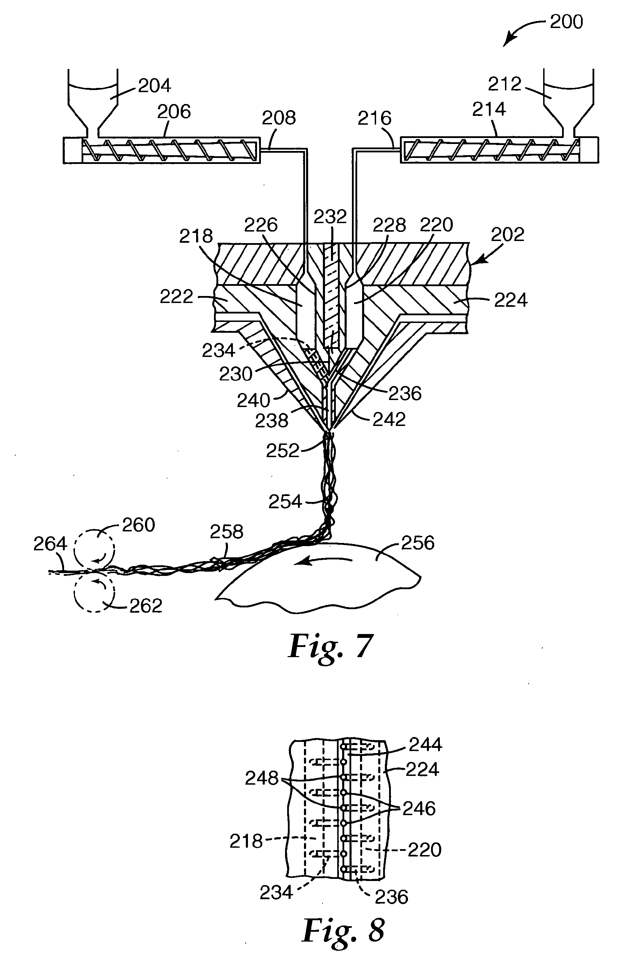

The disclosed stiff filtration web may conveniently be formed as a web containing a bimodal mass fraction/fiber size mixture of microfibers and larger size fibers, like webs described in U.S. Patent Application Serial Nos. 11/461,136 and 11/461,145 filed July 31, 2006 and in copending U.S. Patent Application Serial No. 11/693,017 filed March 29, 2007. The manufacturing process described in the latter application is exemplary and may be summarized as follows. **Fig. 7** and **Fig. 8** illustrate an apparatus **200** for making a porous monocomponent nonwoven web containing a bimodal fiber count/fiber size mixture of intermingled continuous microfibers and larger size fibers of the same polymeric composition. Meltblowing die **202** is supplied with a first liquefied fiber-forming material fed from hopper **204,** extruder **206** and conduit **208** at a first flow rate or first viscosity. Die **202** is separately supplied with a second liquefied fiber-forming material of the same polymeric composition fed from hopper **212,** extruder **214** and conduit **216** at a second, different flow rate or viscosity. The conduits **208** and **216** are in respective fluid communication with first and second die cavities **218** and **220** located in first and second generally symmetrical parts **222** and **224** which form outer walls for die cavities **218** and **220.** First and second generally symmetrical parts **226** and **228** form inner walls for die cavities **218** and **220** and meet at seam **230.** Parts **226** and **228** may be separated along most of their length by insulation **232.** Deflector plates **240** and **242** direct streams of attenuating fluid (e.g., heated air) so that they converge on an array of filaments **252** issuing from meltblowing die **202** and attenuate the filaments **252** into fibers **254.** The fibers **254** land against porous collector **256** and form a self-supporting nonwoven meltblown web **258.** Web **258** may optionally be calendered using for example rollers **260** and **262** to provide calendered web **264.** The rates at which polymer is supplied from hoppers **204** and **212,** the rate at which collector **256** is operated or the temperatures employed when operating apparatus **200** may be adjusted to provide a collected web having the desired degree of Gurley Stiffness.

**Fig. 8** shows meltblowing die **202** in outlet end perspective view, with the attenuating gas deflector plates **240** and **242** removed. Parts **222** and **224** meet along seam **244** in which is located a first set of orifices **246** and a second set of orifices **248** and through which the array of filaments **252** will emerge. Die cavities **218** and **220** are in respective fluid communication via passages **234, 236** and **238** with the first set of orifices **246** and second set of orifices **248.**

The apparatus shown in **Fig. 7** and **Fig. 8** may be operated in several modes or modified in several ways to provide a stream of larger size fibers issuing from one die cavity and smaller size fibers issuing from the other die cavity and thereby form a nonwoven web containing a bimodal mass fraction/fiber size mixture of intermingled larger size fibers and smaller size fibers of the same polymeric composition. For example, an identical polymer may be supplied from each extruder **206** and **214** (or, if desired, from a single extruder with two outlets, not shown in **Fig. 7)** through a larger size conduit **208** into die cavity **218** and through a smaller size conduit **216** into die cavity **220** so as to produce smaller size fibers from orifices **246** and larger size fibers from orifices **248.** An identical polymer may be supplied from extruder **206** to die cavity **218** and from extruder **214** to die cavity **220,** with extruder **206** having a larger diameter or higher operating temperature than extruder **214** so as to supply the polymer at a higher flow rate or lower viscosity into die cavity **218** and a lower flow rate or higher viscosity into die cavity **220** and produce smaller size fibers from orifices **246** and larger size fibers from orifices **248.** Die cavity **218** may be operated at a high temperature and die cavity **220** may be operated at a low temperature so as to produce smaller size fibers from orifices **246** and larger size fibers from orifices **248.** Polymers of the same polymeric composition but different melt indices may be supplied from extruder **206** to die cavity **218** and from extruder **214** to die cavity **220** (using for example a low melt index version of the polymer in extruder **206** and a high melt index of the same polymer in extruder **214** so as to produce smaller size fibers from orifices **246** and larger size fibers from orifices **248).** Those having ordinary skill in the art will appreciate that other techniques (e.g., the inclusion of a solvent in the stream of liquefied fiber-forming material flowing to die cavity **218,** or the use of a shorter flow path through die cavity **218** and a longer flow path through die cavity **220)** and combinations of such techniques and the various operating modes discussed above may also be employed.

For the embodiment shown in **Fig. 8,** the orifices **246** and **248** are arranged in alternating order in a single row across the outlet end of die **202,** and in respective fluid communication in a 1:1 ratio with the die cavities **218** and **220.** Other arrangements of the orifices and other ratios of the numbers of orifices **246** and **248** may be employed to provide nonwoven webs with altered fiber size distributions. For example, the orifices may be arranged in a plurality of rows (e.g., 2, 3, 4 or more rows) between the attenuating air outlets. Patterns other than rows may be employed if desired, e.g., randomly-located orifices. If arranged in a plurality of rows, each row may contain orifices from only one set or from both the first and second sets. The number of orifices in the first and second set may stand in a variety of ratios, e.g., 10:90, 20:80, 30:70, 40:60, 50:50, 60:40, 70:30, 80:20, 90:10 and other ratios depending on the desired web structure. When orifices from both the first and second set are arranged in a row or rows, the first and second set orifices need not alternate and instead may be arranged in any desired fashion, e.g., 1221, 1122211, 11112221111 and other arrangements depending on the desired web structure. The die tip may contain more than one set of orifices, e.g., first, second, third and if need be further sets of orifices in respective fluid communication with first, second, third and if need be further die cavities within the meltblowing die so as to obtain a web with a tri- or greater-modal distribution of fiber sizes.

The remaining portions of the associated meltblowing apparatus will be familiar to those having ordinary skill in the art. For example, further details regarding meltblowing may be found in Wente, Van A. "Superfine Thermoplastic Fibers," in Industrial Engineering Chemistry, Vol. 48, pages 1342 et seq. (1956), or in Report No. 4364 of the Naval Research Laboratories, published May 25, 1954, entitled "Manufacture of Superfine Organic Fibers" by Wente, V. A.;

Boone, C. D.; and Fluharty, E. L.; and in U.S. Patent No. 5,993,943 (Bodaghi et al.).

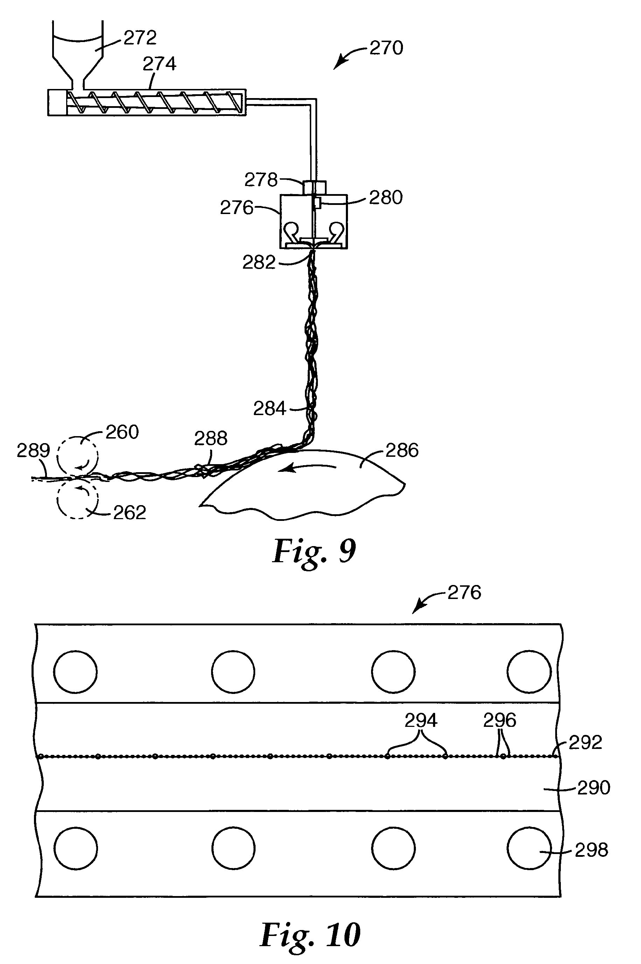

The disclosed stiff filtration web may also be formed using meltblowing and an apparatus 270 like that shown in **Fig. 9.** Liquefied fiber-forming polymeric material fed from hopper 272 and extruder 274 enters meltblowing die 276 via inlet 278, flows through die cavity 280, and exits die cavity 280 through a row (discussed below in connection with **Fig. 10)** of larger and smaller size orifices arranged in line across the forward end of die cavity 280 and through which the fiber-forming material is extruded as an array of filaments 282. A set of cooperating gas orifices through which a gas, typically heated air, is forced at very high velocity, attenuate the filaments 282 into fibers 284. The fibers 284 land against porous collector 286 and form a self-supporting nonwoven meltblown web 288. The web may optionally be calendered using for example rollers 260 and 262 to provide calendered web 289. The rates at which polymer is supplied from hopper 272, the rate at which collector 286 is operated or the temperatures employed when operating apparatus 270 may be adjusted to provide a collected web having the desired degree of Gurley Stiffness.

**Fig. 10** shows meltblowing die 276 in outlet end perspective view, with the attenuating gas deflector plates removed. Die 276 includes a projecting tip portion 290 with a row 292 of larger orifices 294 and smaller orifices 296 which define a plurality of flow passages through which liquefied fiber-forming material exits die 276 and forms the filaments 282. Holes 298 receive through-bolts (not shown in **Fig. 10)** which hold the various parts of the die together. In the embodiment shown in **Fig. 10,** the larger orifices 294 and smaller orifices 296 have a 2:1 size ratio and there are 9 smaller orifices 296 for each larger orifice 294. Other ratios of larger:smaller orifice sizes may be used, for example ratios of 1.5:1 or more, 2:1 or more, 2.5:1 or more, 3:1 or more, or 3.5:1 or more. Other ratios of the number of smaller orifices per larger orifice may also be used, for example ratios of 5:1 or more, 6:1 or more, 10:1 or more, 12:1 or more, 15:1 or more, 20:1 or more or 30:1 or more. Typically there will be a direct correspondence between the number of smaller orifices per larger orifice and the number of smaller diameter fibers (e.g., microfibers under appropriate operating conditions) per larger size fiber. As will be appreciated by persons having ordinary skill in the art, appropriate polymer flow rates, die operating temperatures and attenuating airflow rates should be chosen so that larger size fibers are produced from attenuated filaments formed by the larger orifices, microfibers are produced from attenuated filaments formed by the smaller orifices, and the completed web has the desired structure, stiffness and other physical properties.

The disclosed bimodal webs may be made in other ways including using meltspinning to form the larger size fibers and using meltblowing to form separately prepared smaller size fibers (e.g., microfibers) of the same polymeric composition. A larger size fiber stream from the meltspinning die and a smaller size fiber stream from the meltblowing die may be positioned so that the two streams merge in flight to provide a combined stream of intermingled larger fibers and smaller fibers which may then land on a suitable collector to provide a nonwoven web containing a bimodal mass fraction/fiber size mixture of the larger and smaller size fibers. Further details regarding this process and the nonwoven webs so made are shown in U.S. Patent Application Serial Nos. 11/457,906, 11/461,145 and 11/461,192 filed July 31, 2006.

The disclosed stiff filtration web may also conveniently be formed as a monocomponent monolayer nonwoven web of continuous monocomponent polymeric fibers made by meltspinning, collecting, heating and quenching the monocomponent polymeric fibers under thermal conditions sufficient to form a web of partially crystalline and partially amorphous oriented meltspun fibers of the same polymeric composition that are bonded to form a coherent and handleable web which further may be softened while retaining orientation and fiber structure, like webs described in U.S. Patent Application Serial Nos. 11/457,899, 11/461,128 and 11/461,201 filed July 31, 2006. The manufacturing process described in these applications is exemplary and may be summarized as follows. A collected web of oriented semicrystalline meltspun fibers which include an amorphous-characterized phase is subjected to a controlled heating and quenching operation that includes a) forcefully passing through the web a fluid heated to a temperature high enough to soften the amorphous-characterized phase of the fibers (which is generally greater than the onset melting temperature of the material of such fibers) for a time too short to melt the whole fibers (*viz.*, causing such fibers to lose their discrete fibrous nature; preferably, the time of heating is too short to cause a significant distortion of the fiber cross-section), and b) immediately quenching the web by forcefully passing through the web a fluid having sufficient heat capacity to solidify the softened fibers (*viz.*, to solidify the amorphous-characterized phase of the fibers softened during heat treatment). Preferably the fluids passed through the web are gaseous streams, and preferably they are air. In this context "forcefully" passing a fluid or gaseous stream through a web means that a force in addition to normal room pressure is applied to the fluid to propel the fluid through the web. In a preferred embodiment, the disclosed quenching step includes passing the web on a conveyor through a device (which can be termed a quenched flow heater, as discussed subsequently) that provides a focused heated gaseous (typically air) stream issuing from the heater under pressure and engaging one side of the web, with a gas-withdrawal device on the other side of the web to assist in drawing the heated gas through the web; generally the heated stream is knife-like or curtain-like (such as emanates from an elongated or rectangular slot), extends across the width of the web, and is uniform (i.e., has a uniformity in temperature and flow so as to heat fibers in the web with a useful degree of uniformity). The heated stream is in some respects similar to the heated stream from a "through-air bonder" or "hot-air knife," though it may be subjected to special controls that modulate the flow, causing the heated gas to be distributed uniformly and at a controlled rate through the width of the web to thoroughly, uniformly and rapidly heat and soften the meltspun fibers to a usefully high temperature. Forceful quenching immediately follows the heating to rapidly freeze the fibers in a purified morphological form ("immediately" means as part of the same operation, i.e., without an intervening time of storage as occurs when a web is wound into a roll before the next processing step). In a preferred embodiment, a gas apparatus is positioned downweb from the heated gaseous stream so as to draw a cooling gas or other fluid, e.g., ambient air, through the web promptly after it has been heated and thereby rapidly quench the fibers. The length of heating is controlled, e.g., by the length of the heating region along the path of web travel and by the speed at which the web is moved through the heating region to the cooling region, to cause the intended melting/softening of the amorphous-characterized phase without melting the whole fiber.

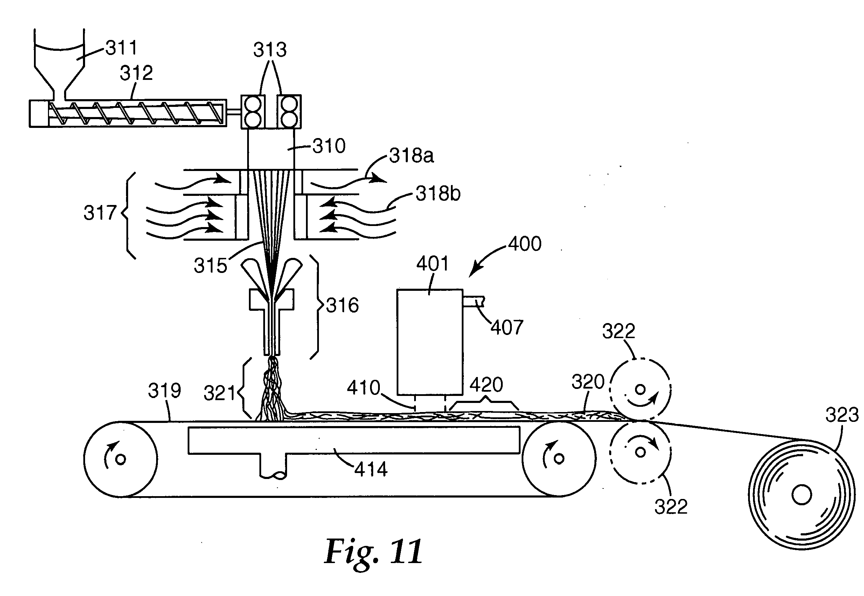

Referring to **Fig. 11,** fiber-forming material is brought to an extrusion head **310** -- in this illustrative apparatus, by introducing a polymeric fiber-forming material into a hopper **311,** melting the material in an extruder **312,** and pumping the molten material into the extrusion head **310** through a pump **313.** Solid polymeric material in pellet or other particulate form is most commonly used and melted to a liquid, pumpable state. The extrusion head **310** may be a conventional spinnerette or spin pack, generally including multiple orifices arranged in a regular pattern, e.g., straight-line rows. Filaments **315** of fiber-forming liquid are extruded from the extrusion head and conveyed to a processing chamber or attenuator **316.** The attenuator may for example be a movable-wall attenuator like that shown in U.S. Patent No. 6,607,624 B2 (Berrigan et al.). The distance **317** the extruded filaments **315** travel before reaching the attenuator **316** can vary, as can the conditions to which they are exposed. Quenching streams of air or other gas **318** may be presented to the extruded filaments to reduce the temperature of the extruded filaments **315.** Alternatively, the streams of air or other gas may be heated to facilitate drawing of the fibers. There may be one or more streams of air or other fluid -- e.g., a first air stream **318a** blown transversely to the filament stream, which may remove undesired gaseous materials or fumes released during extrusion; and a second quenching air stream **318b** that achieves a major desired temperature reduction. Even more quenching streams may be used; for example, the stream **318b** could itself include more than one stream to achieve a desired level of quenching. Depending on the process being used or the form of finished product desired, the quenching air may be sufficient to solidify the extruded filaments **315** before they reach the attenuator **316.** In other cases the extruded filaments are still in a softened or molten condition when they enter the attenuator. Alternatively, no quenching streams are used; in such a case ambient air or other fluid between the extrusion head **310** and the attenuator **316** may be a medium for any change in the extruded filaments before they enter the attenuator.

The filaments **315** pass through the attenuator **316** and then exit onto a collector **319** where they are collected as a mass of fibers **320.** In the attenuator the filaments are lengthened and reduced in diameter and polymer molecules in the filaments become oriented, and at least portions of the polymer molecules within the fibers become aligned with the longitudinal axis of the fibers. In the case of semicrystalline polymers, the orientation is generally sufficient to develop strain-induced crystallinity, which greatly strengthens the resulting fibers. The collector **319** is generally porous and a gas-withdrawal device **414** can be positioned below the collector to assist deposition of fibers onto the collector. The distance **321** between the attenuator exit and the collector may be varied to obtain different effects. Also, prior to collection, extruded filaments or fibers may be subjected to a number of additional processing steps not illustrated in **Fig. 11,** e.g., further drawing, spraying, etc. After collection the collected mass **320** is generally heated and quenched as described in more detail below; but the mass could be wound into a storage roll for later heating and quenching if desired. Generally, once the mass **320** has been heated and quenched it may be conveyed to other apparatus such as optional calender rolls **322** and **323,** or it may be wound into a storage roll **323** for later use.

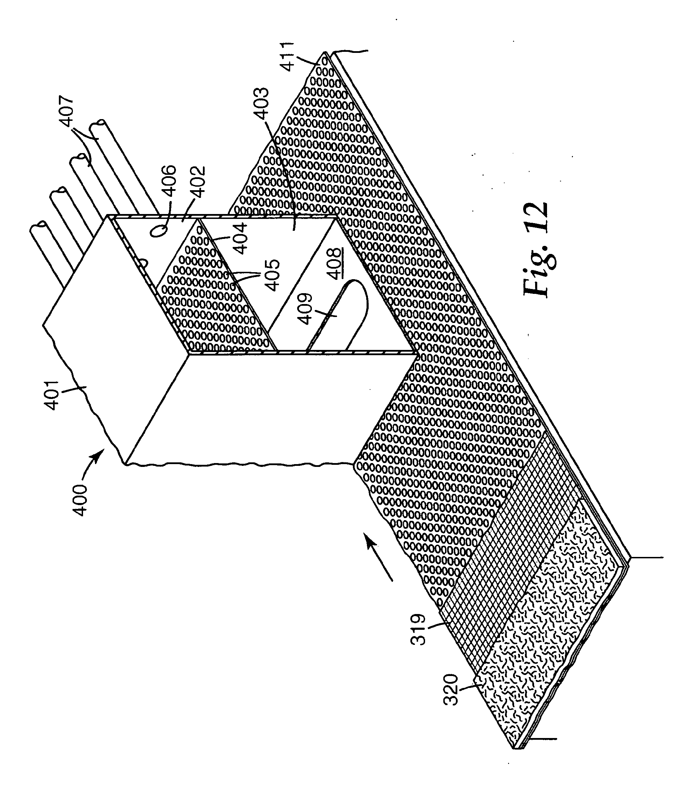

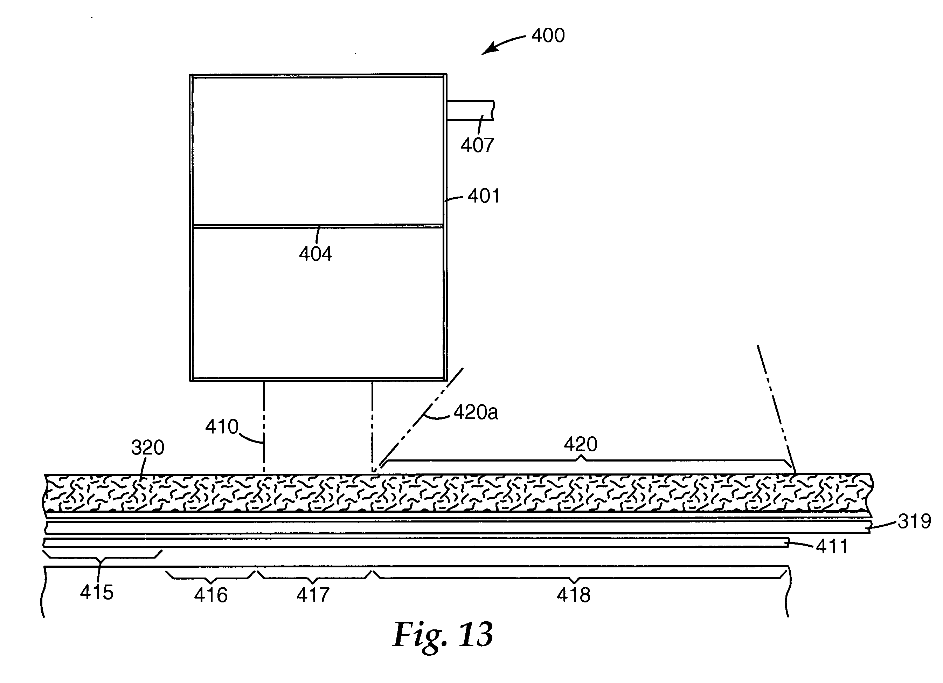

In a preferred method of forming the web, the mass **320** of fibers is carried by the collector **319** through a heating and quenching operation as illustrated in **Fig. 12** and **Fig. 13.** For shorthand purposes we often refer to the apparatus pictured particularly in **Fig. 12** and **Fig. 13** as a quenched flow heater, or more simply a quenched heater. The collected mass **320** is first passed under a controlled-heating device **400** mounted above the collector **319.** The exemplary heating device **400** comprises a housing **401** that is divided into an upper plenum **402** and a lower plenum **403.** The upper and lower plenums are separated by a plate **404** perforated with a series of holes **405** that are typically uniform in size and spacing. A gas, typically air, is fed into the upper plenum **402** through openings **406** from conduits **407,** and the plate **404** functions as a flow-distribution means to cause air fed into the upper plenum to be rather uniformly distributed when passed through the plate into the lower plenum **403.** Other useful flow-distribution means include fins, baffles, manifolds, air dams, screens or sintered plates, i.e., devices that even the distribution of air.

In the illustrative heating device **400** the bottom wall **408** of the lower plenum **403** is formed with an elongated, rectangular slot **409** through which a curtain-like stream **410** of heated air from the lower plenum is blown onto the mass **320** traveling on the collector **319** below the heating device **400** (the mass **320** and collector **319** are shown partly broken away in **Fig. 12).** The gas-withdrawal device **414** preferably extends sufficiently to lie under the slot **409** of the heating device **400** (as well as extending downweb a distance **418** beyond the heated stream **410** and through an area marked **420,** as will be discussed below). Heated air in the plenum is thus under an internal pressure within the plenum **403,** and at the slot **409** it is further under the exhaust vacuum of the gas-withdrawal device **414.** To further control the exhaust force a perforated plate **411** may be positioned under the collector **319** to impose a kind of back pressure or flow-restriction means that contributes to spreading of the stream **410** of heated air in a desired uniformity over the width or heated area of the collected mass **320** and be inhibited in streaming through possible lower-density portions of the collected mass. Other useful flow-restriction means include screens or sintered plates.

The number, size and density of openings in the plate **411** may be varied in different areas to achieve desired control. Large amounts of air pass through the fiber-forming apparatus and must be disposed of as the fibers reach the collector in the region 415. Sufficient air passes through the web and collector in the region **416** to hold the web in place under the various streams of processing air. Sufficient openness is needed in the plate under the heat-treating region **417** and quenching region **418** to allow treating air to pass through the web, while sufficient resistance remains to assure that the air is more evenly distributed. The amount and temperature of heated air passed through the mass **320** is chosen to lead to an appropriate modification of the morphology of the fibers. Particularly, the amount and temperature are chosen so that the fibers are heated to a) cause melting/softening of significant molecular portions within a cross-section of the fiber, e.g., the amorphous-characterized phase of the fiber, but b) will not cause complete melting of another significant phase, e.g., the crystallite-characterized phase. We use the term "melting/softening" because amorphous polymeric material typically softens rather than melts, while crystalline material, which may be present to some degree in the amorphous-characterized phase, typically melts. This can also be stated, without reference to phases, simply as heating to cause melting of lower-order crystallites within the fiber. The fibers as a whole remain unmelted, e.g., the fibers generally retain the same fiber shape and dimensions as they had before treatment. Substantial portions of the crystallite-characterized phase are understood to retain their pre-existing crystal structure after the heat treatment. Crystal structure may have been added to the existing crystal structure, or in the case of highly ordered fibers crystal structure may have been removed to create distinguishable amorphous-characterized and crystallite-characterized phases.

To achieve the intended fiber morphology change throughout the collected mass **320,** the temperature-time conditions should be controlled over the whole heated area of the mass. Desirable results have been obtained when the temperature of the stream **410** of heated air passing through the web is within a range of 5° C, and preferably within 2 or even 1° C, across the width of the mass being treated (the temperature of the heated air is often measured for convenient control of the operation at the entry point for the heated air into the housing **401,** but it also can be measured adjacent the collected web with thermocouples). In addition, the heating apparatus is operated to maintain a steady temperature in the stream over time, e.g., by rapidly cycling the heater on and off to avoid over- or under-heating.

To further control heating and to complete formation of the desired morphology of the fibers of the collected mass **320,** the mass is subjected to quenching immediately after the application of the stream **410** of heated air. Such a quenching can generally be obtained by drawing ambient air over and through the mass **320** as the mass leaves the controlled hot air stream **410.** Numeral **420** in **Fig. 13** represents an area in which ambient air is drawn through the web by the gas-withdrawal device through the web. The gas-withdrawal device **414** extends along the collector for a distance **418** beyond the heating device **400** to assure thorough cooling and quenching of the whole mass **320** in the area **420.** Air can be drawn under the base of the housing **401,** e.g., in the area **420a** marked on **Fig. 13,** so that it reaches the web directly after the web leaves the hot air stream **410.** A desired result of the quenching is rapidly to remove heat from the web and the fibers and thereby limit the extent and nature of crystallization or molecular ordering that will subsequently occur in the fibers. Generally the disclosed heating and quenching operation is performed while a web is moved through the operation on a conveyor, and quenching is performed before the web is wound into a storage roll at the end of the operation. The times of treatment depend on the speed at which a web is moved through an operation, but generally the total heating and quenching operation is performed in a minute or less, and preferably in less than 15 seconds. By rapid quenching from the molten/softened state to a solidified state, the amorphous-characterized phase is understood to be frozen into a more purified crystalline form, with reduced molecular material that can interfere with softening, or repeatable softening, of the fibers. Desirably the mass is cooled by a gas at a temperature at least 50°C less than the Nominal Melting Point; also the quenching gas or other fluid is desirably applied for a time on the order of at least one second, desirably for a time at least two or three times as long as the heated stream engaged the web. In any event the quenching gas or other fluid has sufficient heat capacity to rapidly solidify the fibers. Other fluids that may be used include water sprayed onto the fibers, e.g., heated water or steam to heat the fibers, and relatively cold water to quench the fibers.

Success in achieving the desired heat treatment and morphology of the amorphous-characterized phase often can be confirmed with DSC testing of representative fibers from a treated web; and treatment conditions can be adjusted according to information learned from the DSC testing, as discussed in greater detail in the above-mentioned Application Serial No. 11/457,899. Desirably the application of heated air and quenching are controlled so as to provide a web whose properties facilitate formation of an appropriate molded matrix. If inadequate heating is employed the web may be difficult to mold. If excessive heating or insufficient quenching are employed, the web may melt or become embrittled and also may not take adequate charge.

When a bimodal stiff filtration web is employed, the microfibers may for example have a size range of about 0.1 to about 10 $\mu$m, about 0.1 to about 5 $\mu$m or about 0.1 to about 1 $\mu$m. The larger size fibers may for example have a size range of about 10 to about 70 $\mu$m, about 10 to about 50 $\mu$m or about 15 to about 50 $\mu$m. A histogram of mass fraction vs. fiber size in $\mu$m may for example have a microfiber mode of about 0.1 to about 10 $\mu$m, about 0.5 to about 8

μm or about 1 to about 5 μm, and a larger size fiber mode of more than 10 μm, about 10 to about 50 μm, about 10 to about 40 μm or about 12 to about 30 μm. The disclosed bimodal webs may also have a bimodal fiber count/fiber size mixture whose histogram of fiber count (frequency) vs. fiber size in μm exhibits at least two modes whose corresponding fiber sizes differ by at least 50%, at least 100%, or at least 200% of the smaller fiber size. The microfibers may also for example provide at least 20% of the fibrous surface area of the web, at least 40% or at least 60%. When a web of partially crystalline and partially amorphous oriented meltspun fibers is employed, the fibers may for example have a size range of about 5 to about 70 μm, about 10 to about 50 μm or about 10 to about 30 μm as measured using optical microscopy. Larger meltspun fibers generally yield stiffer finished webs.

Depending on the process and process conditions used to make the disclosed stiff filtration web, some bonding may occur between the fibers during web formation, and thus the completed web may contain fibers bonded to one another at at least some points of fiber intersection. Further bonding between fibers in the collected web may be needed to provide a web having the desired degree of stiffness. However, excessive bonding may also need to be avoided so as to limit pressure drop or other finished web or respirator properties.

After formation, the stiff filtration web is next subjected to charging and optional calendering. Although charging and calendering may be performed in either order, charging desirably is performed first so that charge will be distributed throughout the web thickness. Charge can be imparted to the disclosed nonwoven webs in a variety of ways. Charging may be carried out, for example, by contacting the web with water as disclosed in U.S. Patent No. 5,496,507 (Angadjivand et al. '507), corona-treating as disclosed in U.S. Patent No. 4,588,537 (Klasse et al.), hydrocharging as disclosed, for example, in U.S. Patent No. 5,908,598 (Rousseau et al.), plasma treating as disclosed in U.S. Patent No. 6,562,112 B2 (Jones et al.) and U.S. Patent Application Publication No. US2003/0134515 A1 (David et al.), or combinations thereof.

Calendering may be performed in a variety of ways that will be familiar to persons having ordinary skill in the art. Calendering usually is performed using heating and optional pressure (e.g., to a temperature between the applicable polymer softening point and melting point at the applicable pressure) and a point-bonding process or smooth calender rolls. Roll calendering is especially useful and may be performed in a variety of ways. For example, the web may be passed one or more times between two mating heated metal rolls to provide a calendered web having two smooth sides. The web may also be passed one or more times between a heated metal roll and mating resilient roll to provide a calendered web having one smooth side. Use of tighter roll gaps, greater nip pressures, higher temperatures or additional passes generally will increase the extent to which the web is stiffened. However calendering, if carried out to too great an extent, may undesirably increase pressure drop or compromise filtration performance in the completed respirator. Calendering typically also will cause the calendered surface to become denser and less porous. Calendaring one or both sides of the stiff filtration layer may discourage shedding sufficiently so that one or both cover webs will not be needed in the finished respirator. Accordingly, a calendered stiff filtration web provides particular advantages in that it may enable elimination of a stiffening layer and one or both covers layer in the completed respirator, thereby eliminating one to three of the layers in a conventional four layer construction.

The disclosed stiff filtration web may be formed in a variety of other ways. For example, the stiff filtration web may include a permeable skin layer or layers formed by melting fibers at and immediately adjacent one or both major surfaces of a nonwoven web, like those shown in U.S. Patent Nos. 6,217,691 B1 and 6,358,592 B2 (both to Vair et al.).

The completed respirator optionally may include an inner cover web of lightweight construction. The inner cover web presents a smooth surface opposite the wearer's face and can increase respirator comfort. An outer cover web may also be employed if desired. As mentioned above, the inner or outer or both inner and outer cover webs preferably are rendered unnecessary through the use of a suitably calendered stiff filtration web. The inner and outer cover webs may have any suitable construction and composition. For example, the inner and outer cover webs may be spunbond webs, or smooth BMF webs made as described in U.S. Patent No. 6,041,782 (Angadjivand et al. '782). In order to improve recyclability, the inner and outer cover webs desirably have the same polymeric composition as the stiff filtration web. The respirator may if desired include one or more additional layers other than those discussed above. For example, one or more porous layers containing sorbent particles may be employed to capture vapors of interest, such as the porous layers described in U.S. Patent Application Serial No. 11/431,152 filed May 8, 2006 and entitled PARTICLE-CONTAINING FIBROUS WEB.

During formation of the disclosed stiff filtration web it typically will be helpful to monitor web properties such as basis weight, web thickness, solidity and Gurley Stiffness. It may also be helpful to monitor additional web properties such as EFD and Taber Stiffness, or completed respirator properties such as pressure drop, initial % NaCl penetration, % DOP penetration or the Quality Factor QF. When exposed to a 1 wt. % sodium chloride aerosol flowing at 95 liters/min, the completed respirator may for example have no more than 20% maximum NaCl penetration. In another embodiment the respirator, if exposed to a 0.075 μm 2% sodium chloride aerosol flowing at 85 liters/min, may have a pressure drop less than 20 mm $H_2O$ or less than 10 mm $H_2O$, and may have a % maximum NaCl loading penetration less than about 5% or less than about 1%.

Basis weight may be determined gravimetrically using samples taken from several (e.g., 3 or more) evenly-space locations across the web widthwise direction. Similar sampling may be used to determine web thickness. Solidity may be calculated from the basis weight and web thickness measurements.

Gurley Stiffness may be determined using a Model 4171E GURLEY™ Bending Resistance Tester from Gurley Precision Instruments. Rectangular samples (3.8 cm x 5.1 cm unless otherwise indicated) are die cut from the webs with the sample long side aligned with the web transverse (cross-web) direction. The samples are loaded into the Bending Resistance Tester with the sample long side in the web holding clamp. The samples are flexed in both directions, *viz.,* with the test arm pressed against the first major sample face and then against the second major sample face, and the average of the two measurements is recorded as the stiffness in milligrams. The test is treated as a destructive test and if further measurements are needed fresh samples are employed.

EFD may be determined (unless otherwise specified) using an air flow rate of 32 L/min (corresponding to a face velocity of 5.3 cm/sec), using the method set forth in Davies, C. N., "The Separation of Airborne Dust and Particles", Institution of Mechanical Engineers, London, Proceedings I B, 1952.

Taber Stiffness may be determined using a Model 150-B TABER™ stiffness tester (commercially available from Taber Industries). Square 3.8 cm x 3.8 cm sections are carefully vivisected from the webs using a sharp razor blade to prevent fiber fusion, and evaluated to determine their stiffness in the machine and transverse directions using 3 to 4 samples and a 15° sample deflection.

Pressure drop, percent penetration and the filtration Quality Factor **QF** may be determined using a challenge aerosol containing NaCl or DOP particles, delivered (unless otherwise indicated) at a flow rate of 95 or 85 liters/min, and evaluated using a TSI™ Model 8130 high-speed automated filter tester (commercially available from TSI Inc.). An MKS pressure transducer (commercially available from MKS Instruments) may be employed to measure pressure drop ($\Delta$P, mm $H_2O$) through the filter. For NaCl testing at 95 liters/min, the particles may generated from a 1% NaCl solution, and the Automated Filter Tester may be operated with both the heater and particle neutralizer on. For NaCl testing at 85 liters/min and using 0.075 $\mu$m diameter particles, the particles may be generated from a 2% NaCl solution to provide an aerosol containing particles at an airborne concentration of about 16-23 mg/m$^3$, and the Automated Filter Tester may be operated with both the heater and particle neutralizer on. For DOP testing, the aerosol may contain particles with a diameter of about 0.185 $\mu$m at a concentration of about 100 mg/m$^3$, and the Automated Filter Tester may be operated with both the heater and particle neutralizer off. The samples may be loaded to the maximum NaCl or DOP particle penetration and calibrated photometers may be employed at the filter inlet and outlet to measure the particle concentration and the % particle penetration through the filter. The equation:

$$QF = \frac{-\ln\left(\dfrac{\%Particle\ Penetration}{100}\right)}{\Delta P}$$

may be used to calculate **QF.** Parameters which may be measured or calculated for the chosen challenge aerosol include initial particle penetration, initial pressure drop, initial Quality Factor **QF,** maximum particle penetration, pressure drop at maximum penetration, and the milligrams of particle loading at maximum penetration (the total weight challenge to the filter up to the time of maximum penetration). The initial Quality Factor **QF** value usually provides a reliable indicator of overall performance, with higher initial **QF** values indicating better filtration performance and lower initial **QF** values indicating reduced filtration performance.

The invention is further illustrated in the following illustrative examples, in which all parts and percentages are by weight unless otherwise indicated.

**Example 1**

Using an apparatus like that shown in **Fig. 7** and **Fig. 8** and procedures like those described in Wente, Van A. "superfine Thermoplastic Fiber", Industrial and Engineering Chemistry, vol. 48. No. 8, 1956, pp 1342-1346 and Naval Research Laboratory Report 111437, Apr. 15, 1954, a meltblown monocomponent monolayer web was formed from larger fibers and smaller size fibers of the same polymeric composition. The larger size fibers were formed using TOTAL 3960 polypropylene (a 350 melt flow rate polymer) to which had been added 0.8 % CHIMASSORB 944 hindered amine light stabilizer as an electret charging additive and 1 % POLYONE™ No. CC10054018WE blue pigment from PolyOne Corp. to aid in assessing the distribution of larger size fibers in the web. The resulting blue polymer blend was fed to a Model 20 DAVIS STANDARD™ 2 in. (50.8mm) single screw extruder from the Davis Standard Division of Crompton & Knowles Corp. The extruder had a 60 in. (152 cm) length and a 30/1 length/diameter ratio. The smaller size fibers were formed using EXXON PP3746 polypropylene (a 1475 melt flow rate polymer) available from Exxon Mobil Corporation to which had been added 0.8 % CHIMASSORB 944 hindered amine light stabilizer. This latter polymer was white in color and was fed to a KILLION™ 0.75 in. (19 mm) single screw extruder from the Davis Standard Division of Crompton & Knowles Corp. Using 10 cc/rev ZENITH™ melt pumps from Zenith Pumps, the flow of each polymer was metered to separate die cavities in a 20 in. (50.8 cm) wide drilled orifice meltblowing die employing 0.015 in. (0.38 mm) diameter orifices at a spacing of 25 holes/in. (10 holes/cm) with alternating orifices being fed by each die cavity. Heated air attenuated the fibers at the die tip. The airknife employed a 0.010 in. (0.25 mm) positive set back and a 0.030 in. (0.76 mm) air gap. A moderate vacuum was pulled through a medium mesh collector screen at the point of web formation, and a 22.5 in. (57.2 cm) DCD (die-to-collector distance) was employed. By adjusting the polymer rate from each extruder webs with 75% larger size fibers and 25% smaller size fibers were produced. The collector speed was adjusted as needed to provide webs with about 200 gsm basis weight. The extrusion temperatures and the pressure of the heated air were adjusted as needed to provide webs with about 20 $\mu$m EFD value. The web was hydrocharged with distilled water according to the technique taught in U.S. Patent No. 5,496,507 (Angadjivand et al. '507) and allowed to dry, then calendered between smooth steel rolls which had been heated to 140° C, gapped to 0.76 mm and operated at 3.05 m/min. Set out below in Table 1A are the run number, basis weight, EFD and Gurley Stiffness for the calendered filtration web.

**Table 1A**

| Run No. | Basis Weight, gsm | EFD, $\mu$m | Gurley Stiffness, mg |
|---------|-------------------|-------------|----------------------|
| 1-1F    | 208               | 20.3        | 889                  |

The calendered filtration web was combined with a 17 gsm spunbond polypropylene inner cover web and a 17 gsm spunbond polypropylene outer cover web in an apparatus like that shown in **Fig. 3** and made into flat-fold respirators like the device shown in **Fig. 1** and **Fig. 2**. The completed respirators were folded and unfolded and found to have both good storage properties when folded flat, and a comfortable fit and desirable off-the-face configuration when worn. The initial NaCl particle penetration for the inventive respirator and a comparison four-layer flat fold respirator made using separate filtration and stiffening layers were also evaluated. Set out below in Table 1B are the run number, respirator identity, initial pressure drop and initial NaCl penetration using a 0.075 $\mu$m diameter NaCl particle aerosol flowing at 85 liters/min.

**Table 1 B**

| Run No. | Respirator Identity | Initial Pressure Drop, mm $H_2O$ | Initial Penetration, % |
|---------|---------------------|----------------------------------|------------------------|
| 1-1R    | 3-layer Respirator Made From Web 1-1F | 6.8 | 1.19 |
| 1-1C    | Comparison 4-layer Respirator | 10 | 8.01 |

The data in Table 1B shows that the Run No. 1-1R respirator had lower initial pressure drop and lower initial NaCl penetration than the comparison 4-layer respirator.

**Example 2**

Using the method of Example 1, a meltblown monocomponent monolayer web was formed from larger fibers and smaller size fibers of the same polymeric composition. The larger size fibers were formed using EXXON PP3155 polypropylene (a 36 melt flow rate polymer) available from Exxon Mobil Corporation to which had been added 0.8 % CHIMASSORB 944 hindered amine light stabilizer as an electret charging additive and 2 % POLYONE No. CC 10054018WE blue pigment. The resulting blue polymer blend was fed to a Model 20 DAVIS STANDARD extruder like that used in Example 1. The smaller size fibers were formed using EXXON PP3746 polypropylene to which had been added 0.8 % CHIMASSORB 944 hindered amine light stabilizer and 2 % POLYONE No. CC10054018WE blue pigment. This latter polymer was fed to a KILLION extruder like that used in Example 1. By using a 13.5 in. (34.3 cm) DCD and adjusting the polymer rate from each extruder, webs with 65% larger size fibers and 35% smaller size fibers were produced. The collector speed was adjusted as needed to provide webs with about 200 to about 250 gsm basis weights, and the extrusion temperatures and heated air pressures were adjusted as needed to provide webs with about 16 to about 18 $\mu$m EFD values. The webs were hydrocharged with distilled water according to the technique taught in Angadjivand et al. '507 and allowed to dry. The resulting webs were made into flat fold respirators like the device shown in **Fig. 1** and **Fig. 2** and evaluated using a 0.075 $\mu$m diameter NaCl particle aerosol flowing at 85 liters/min. Set out below in Table 2A are the run number; the basis weight, EFD, thickness and Gurley Stiffness for the calendered filtration webs; and the initial pressure drop and initial NaCl penetration for the finished respirators.

**Table 2A**

| Run No. | Basis Weight, gsm | EFD, $\mu$m | Thickness, mm | Gurley Stiffness, mg | Initial Pressure Drop, mm $H_2O$ | Initial Penetration, % |
|---|---|---|---|---|---|---|
| 2-1 | 202 | 16.8 | 0.325 | 1012 | 3.8 | 3.45 |
| 2-2 | 224 | 16.7 | 0.394 | 991 | 3.8 | 3.46 |
| 2-3 | 251 | 16.3 | 0.470 | 1315 | 4.6 | 2.75 |
| 2-4 | 206 | 17.0 | 0.325 | 1350 | 3.2 | 4.96 |
| 2-5 | 226 | 18.3 | 0.345 | 1325 | 3.5 | 4.45 |
| 2-6 | 248 | 18.4 | 0.378 | 1623 | 4.5 | 2.93 |

The results in Table 2A show that each respirator should meet European FFP1 filtering facepiece requirements (see EN149:2001, Respiratory protective devices. Filtering half masks to protect against particles).

**Example 3**

Using an apparatus like that shown in **Fig. 9** and **Fig. 10** and procedures like those described in Wente, Van A. "superfine Thermoplastic Fiber", Industrial and Engineering Chemistry, vol. 48. No. 8, 1956, pp 1342-1346 and Naval Research Laboratory Report 111437, Apr. 15, 1954, four monocomponent monolayer meltblown webs were formed from TOTAL 3960 polypropylene to which had been added 0.8 % tristearyl melamine as an electret charging additive. The polymer was fed to a Model 20 DAVIS STANDARD 2 in. (50.8mm) single screw extruder with a 20/1 length/diameter ratio and a 3/1 compression ratio. A ZENITH 10 cc/rev melt pump metered the flow of polymer to a 10 in. (25.4 cm) wide drilled orifice meltblowing die whose original 0.0.12 in. (0.3 mm) orifices had been modified by drilling out every 9th orifice to 0.025 in. (0.6 mm), thereby providing a 9:1 ratio of the number of smaller size to larger size holes and a 60:40 ratio of larger hole size to smaller hole size. The line of orifices had 25 holes/inch (10 holes/cm) hole spacing. Heated air attenuated the fibers at the die tip. The airknife employed a 0.010 in. (0.25 mm) positive set back and a 0.030 in. (0.76 mm) air gap. No to moderate vacuum was pulled through a medium mesh collector screen at the point of web formation. The polymer output rate from the extruder was varied as needed from a 2.0 lbs/in/hr (0.36 kg/cm/hr) starting point, the DCD was varied from 11.50 to 16.25 in. (29.21cm to 41.725 cm) and the air pressure was adjusted as needed to provide webs with a basis weight and EFD as shown below in Table 3A. The webs were hydrocharged with distilled water according to the technique taught in Angadjivand et al. '507 and allowed to dry. Set out below in Table 3A are the Sample Number, basis weight, EFD, web thickness, initial pressure drop, initial NaCl penetration and Quality Factor QF for each web at a 13.8 cm/sec face velocity.

**Table 3A**

| Sample No. | Basis Weight, gsm | EFD, $\mu$m | Pressure Drop, mm $H_2O$ | Initial Penetration, % | Quality Factor QF, l/mm $H_2O$ |
|---|---|---|---|---|---|
| 3-1 | 173 | 13 | 5.10 | 0.71 | 0.97 |
| 3-2 | 200 | 13 | 6.40 | 0.54 | 0.81 |
| 3-3 | 222 | 13 | 6.80 | 0.44 | 0.80 |
| 3-4 | 254 | 13 | 7.10 | 0.21 | 0.87 |
| 3-5 | 175 | 15 | 4.40 | 1.44 | 0.96 |
| 3-6 | 197 | 15 | 5.00 | 0.97 | 0.93 |
| 3-7 | 229 | 15 | 5.60 | 0.95 | 0.83 |
| 3-8 | 243 | 15 | 6.20 | 0.53 | 0.84 |

The webs were next lightly calendered for one or two passes between rolls heated to 141° C and operating at a 3.05 m/min line speed. Calendering gaps of about 1.5 to 2.2 mm were employed. The calendering gaps and web thicknesses for each sample are shown below in Table 3B:

**Table 3B**

| Sample No. | Calender Gap, mm | Thickness, mm | | |
|---|---|---|---|---|
| | | Uncalendered | Calendered Once | Calendered Twice |
| 3-1 | 1.5 | 3.02 | 2.69 | 2.72 |
| 3-2 | 1.8 | 3.66 | 2.90 | 3.25 |
| 3-3 | 1.9 | 3.91 | 3.58 | 3.71 |
| 3-4 | 2.2 | 4.34 | 3.89 | 4.01 |
| 3-5 | 1.5 | 2.82 | 2.59 | 2.54 |
| 3-6 | 1.8 | 3.12 | 2.79 | 2.69 |
| 3-7 | 1.9 | 3.73 | 3.40 | 3.23 |
| 3-8 | 2.2 | 4.06 | 3.48 | 3.40 |

The Gurley Stiffness values (measured using 25.4 x 38.1 mm samples) and pressure drop values (measured using a 32 l/min flow rate) for each sample are shown below in Table 3C:

**Table 3C**

| Sample No. | Gurley Stiffness, mg | | | Pressure Drop, mm $H_2O$ | | |
|---|---|---|---|---|---|---|
| | Uncalendered | Calendered Once | Calendered Twice | Uncalendered | Calendered Once | Calendered Twice |
| 3-1 | 365 | 410 | 411 | 1.76 | 1.84 | 1.99 |
| 3-2 | 479 | 464 | 458 | 2.08 | 2.09 | 2.12 |
| 3-3 | 595 | 538 | 496 | 2.33 | 2.4 | 2.59 |
| 3-4 | 700 | 693 | 655 | 2.6 | 2.84 | 2.86 |
| 3-5 | 486 | 513 | 540 | 1.45 | 1.59 | 1.54 |
| 3-6 | 633 | 560 | 633 | 1.55 | 1.73 | 1.70 |
| 3-7 | 718 | 742 | 816 | 1.9 | 1.78 | 1.92 |
| 3-8 | 900 | 835 | 896 | 1.95 | 2.02 | 2.12 |

The results in Table 3C show, *inter alia,* that pressure drop was not significantly adversely affected by calendering. The webs were made into flat fold respirators like the device shown in **Fig. 1** and **Fig. 2** and evaluated using a 0.075 $\mu$m diameter NaCl particle aerosol flowing at 85 liters/min. Respirators made using the uncalendered stiff filtration webs also employed inner and outer cover webs like those used in Example 2, and had a 3-layer construction. Respirators made using stiff filtration webs calendered on one side also employed an inner cover web like the web used in Example 2, and had a 2-layer construction. Respirators made using stiff filtration webs calendered on two sides employed no cover webs, and had a 1-layer construction. Set out below in Table 3D are the run number; percent penetration and Quality Factor QF for the finished respirators

**Table 3D**

| Sample No. | % Penetration | | | Quality Factor, QF | | |
|---|---|---|---|---|---|---|
| | Uncalendered | Calendered Once | Calendered Twice | Uncalendered | Calendered Once | Calendered Twice |
| 3-1 | 0.71 | 0.50 | 0.51 | 0.97 | 1.00 | 0.85 |
| 3-2 | 0.54 | 0.34 | 0.32 | 0.81 | 0.95 | 0.93 |
| 3-3 | 0.44 | 0.12 | 0.14 | 0.80 | 0.94 | 0.90 |

(continued)

| Sample No. | % Penetration | | | Quality Factor, QF | | |
|---|---|---|---|---|---|---|
| | Uncalendered | Calendered Once | Calendered Twice | Uncalendered | Calendered Once | Calendered Twice |
| 3-4 | 0.21 | 0.11 | 0.06 | 0.87 | 0.86 | 0.88 |
| 3-5 | 1.44 | 1.17 | 1.18 | 0.96 | 0.99 | 0.97 |
| 3-6 | 0.97 | 0.81 | 0.73 | 0.93 | 1.02 | 0.96 |
| 3-7 | 0.95 | 0.57 | 0.63 | 0.83 | 0.97 | 0.89 |
| 3-8 | 0.53 | 0.44 | 0.42 | 0.84 | 0.93 | 0.96 |

The results in Table 3D show, *inter alia,* that % penetration and the Quality factor **QF** were not significantly adversely affected by calendering.

Set out below in Table 3E are the run number, initial pressure drop, initial % penetration, pressure drop at maximum penetration, maximum % penetration, challenge at maximum penetration and total aerosol challenge for the 3-layer respirators made from the uncalendered web samples:

**Table 3E**

| Uncalendered Webs | | | | | | |
|---|---|---|---|---|---|---|
| Sample No. | Initial Pressure Drop, mm $H_2O$ | Initial Pen., % | Pressure Drop at Max. Pen., mm $H_2O$ | Max. Pen., % | Challenge at Max. Pen., mg | Total Aerosol Challenge, mg |
| 3-1 | 3.8 | 0.089 | 83.1 | 3.720 | 127.3 | 185.0 |
| 3-2 | 4.2 | 0.071 | 14.7 | 1.640 | 111.2 | 130.1 |
| 3-3 | 4.6 | 0.069 | 13.8 | 0.919 | 117.9 | 121.8 |
| 3-4 | 5.1 | 0.000 | 27.4 | 0.250 | 102.7 | 138.5 |
| 3-5 | 3.4 | 0.216 | 18.0 | 6.720 | 99.7 | 123.6 |
| 3-6 | 3.5 | 0.143 | 14.9 | 4.980 | 103.9 | 126.9 |
| 3-7 | 4.2 | 0.084 | 28.6 | 2.800 | 127.8 | 149.9 |
| 3-8 | 4.4 | 0.000 | 13.9 | 1.620 | 117.2 | 129.1 |

The results in Table 3E show that the 3-layer respirators made using the uncalendered webs of Sample Nos. 3-1 through 3-4, 3-7 and 3-8 should pass the N95 NaCl loading test of 42 C.F.R. Part 84.

Set out below in Table 3F are the run number, initial pressure drop, initial % penetration, pressure drop at maximum penetration, maximum % penetration, challenge at maximum penetration and total aerosol challenge for the 2-layer respirators made from the web samples which had been calendered on one side:

**Table 3F**

| Webs Calendered on One Side | | | | | | |
|---|---|---|---|---|---|---|
| Sample No. | Initial Pressure Drop, mm $H_2O$ | Initial Pen., % | Pressure Drop at Max. Pen., mm $H_2O$ | Max. Pen., % | Challenge at Max. Pen., mg | Total Aerosol Challenge, mg |
| 3-1 | 3.2 | 0.016 | 6.0 | 4.040 | 106.8 | 107.8 |
| 3-2 | 3.4 | 0.029 | 5.4 | 1.680 | 106.2 | 106.6 |
| 3-3 | 4.2 | 0.006 | 7.1 | 0.589 | 105.9 | 106.0 |

(continued)

| Webs Calendered on One Side | | | | | | |
|---|---|---|---|---|---|---|
| Sample No. | Initial Pressure Drop, mm $H_2O$ | Initial Pen., % | Pressure Drop at Max. Pen., mm $H_2O$ | Max. Pen., % | Challenge at Max. Pen., mg | Total Aerosol Challenge, mg |
| 3-4 | 4.7 | 0.009 | 7.6 | 0.312 | 105.4 | 105.5 |
| 3-5 | 2.7 | 0.183 | 5.1 | 10.000 | 108.1 | 108.2 |
| 3-6 | 2.9 | 0.133 | 5.3 | 10.500 | 147.5 | 148.2 |
| 3-7 | 3.3 | 0.106 | 5.2 | 5.510 | 105.2 | 105.5 |
| 3-8 | 3.4 | 0.052 | 5.8 | 4.990 | 133.5 | 135.1 |

The results in Table 3F show that the 2-layer respirators made using the single-side calendered webs of Sample Nos. 3-1 through 3-4 and 3-8 should pass the N95 NaCl loading test of 42 C.F.R. Part 84.

Set out below in Table 3G are the run number, initial pressure drop, initial % penetration, pressure drop at maximum penetration, maximum % penetration, challenge at maximum penetration and total aerosol challenge for the 1-layer respirators made from the web samples which had been calendered on both sides:

**Table 3G**

| Webs Calendered on Both Sides | | | | | | |
|---|---|---|---|---|---|---|
| Sample No. | Initial Pressure Drop, mm $H_2O$ | Initial Pen., % | Pressure Drop at Max. Pen., mm $H_2O$ | Max. Pen., % | Challenge at Max. Pen., mg | Total Aerosol Challenge, mg |
| 3-1 | 2.8 | 0.484 | 6.7 | 4.670 | 114.9 | 115.0 |
| 3-2 | 3.1 | 0.016 | 5.2 | 2.100 | 106.7 | 107.1 |
| 3-3 | 3.8 | 0.012 | 7.3 | 0.736 | 119.1 | 121.6 |
| 3-4 | 4.2 | 0.000 | 6.9 | 0.253 | 103.6 | 103.6 |
| 3-5 | 2.2 | 0.216 | 4.4 | 12.500 | 120.4 | 123.2 |
| 3-6 | 2.5 | 0.111 | 7.4 | 10.700 | 160.1 | 201.0 |
| 3-7 | 3.0 | 0.153 | 4.9 | 4.920 | 105.1 | 106.2 |
| 3-8 | 3.1 | 0.064 | 7.2 | 6.410 | 198.2 | 211.0 |

The results in Table 3G show that the 2-layer respirators made using webs of Sample Nos. 3-1 through 3-4 and 3-7 calendered on both sides should pass the N95 NaCl loading test of 42 C.F.R. Part 84.

**Example 4**

Using an apparatus like that shown in **Fig. 11** through **Fig. 13,** a monocomponent monolayer web (web 4-1) was formed from FINA 3860 polypropylene having a melt flow rate index of 70 available from Total Petrochemicals. The extrusion head 10 had 488 holes of 0.5 mm (0.020 in) diameter arranged in a staggered 203 mm (8 in) wide pattern. The polymer was fed to the extrusion head at 0.2 g/hole/minute, where the polymer was heated to a temperature of 205° C (401° F). Two quenching air streams **(318b** in **Fig. 11;** stream **318a** was not employed) were supplied as an upper stream from quench boxes 406 mm (16 in) in height at an approximate face velocity of 0.37 m/sec (73 ft/min) and a temperature of 1.7° C (35° F), and as a lower stream from quench boxes 197 mm (7.75 in) in height at an approximate face velocity of face velocity of 0.11 m/sec (22 ft/min) and ambient room temperature. A movable-wall attenuator like that shown in Berrigan et al. was employed, using an air knife gap **(30** in Berrigan et al.) of 0.76 mm (0.030 in), air fed to the air knife at a pressure of 0.096 MPa (14 psig), an attenuator top gap width of 5.1 mm (0.20 in), an attenuator bottom gap width of 4.7 mm (0.185 in), and 152 mm (6 in) long attenuator sides **(36** in Berrigan et al.). The distance

(317 in **Fig. 11**) from the extrusion head **310** to the attenuator **316** was 78.7 cm (31 in), and the distance (**321** in **Fig. 11**) from the attenuator **316** to the collection belt **319** was 68.6 cm (27 in). The meltspun fiber stream was deposited on the collection belt **319** at a width of about 51 cm (about 20 in). Collection belt **319** moved at a rate of about 1.8 meters/min (6 ft/min). The vacuum under collection belt **319** was estimated to be in the range of about 1.5-3.0 KPa (6-12 in. $H_2O$). The region **415** of the plate **411** had 1.6 mm (0.062-inch-diameter) openings in a staggered spacing resulting in 23% open area; the web hold-down region **416** had 1.6 mm (0.062-inch) diameter openings in a staggered spacing resulting in 30 % open area; and the heating/bonding region **417** and the quenching region **418** had 4.0 mm (0.156-inch) diameter openings in a staggered spacing resulting in 63% open area. Air was supplied through the conduits **407** at a rate sufficient to present about 14.2 $m^3$/min (about 500 ft.$^3$/min) of air at the slot **409,** which was 3.8 by 85.3 cm (1.5 in. by 26 in). The bottom of the plate **408** was 3.175 cm (1.25 in) from the collected web **320** on collector **319**. The temperature of the air passing through the slot **409** of the quenched flow heater was 157° C (315° F) as measured at the entry point for the heated air into the housing **401**.

The web leaving the quenching area **420** was bonded with sufficient integrity to be self-supporting and handleable using normal processes and equipment; the web could be wound by normal windup into a storage roll or could be subjected to various operations such as heating and compressing the web over a hemispherical mold to form a molded respirator. The web was hydrocharged with distilled water according to the technique taught in Angadjivand et al. '507, and allowed to dry.

A second monocomponent monolayer web (web 4-2) was similarly made from FINA 3860 polypropylene to which had been added 0.5 wt. % of CHIMASSORB 944 hindered-amine light stabilizer from Ciba Specialty Chemicals. The conditions were the same as for web 4-1 except that extrusion head **10** had 512 holes arranged in a 10 cm (4 in) by 20 cm (8 in) pattern with 0.64 cm (0.25 in) hole spacing and with the long dimension of the pattern arranged across the web. The upper quench stream had an approximate face velocity of 0.32 m/sec (63 ft/min). The attenuator bottom gap width was 4.8 mm (0.19 in). The meltspun fiber stream was deposited on the collection belt **319** at a width of about 46 cm (about 18 in). Collection belt **319** moved at a rate of about 1.77 meters/min (5.8 ft/min). The bottom of the plate **408** was 4.1 cm (1.6 in) from the collected web **320** on collector **319**. The collected web was hydrocharged with distilled water according to the technique taught in Rousseau et al. and allowed to dry.

The charged webs were evaluated to determine the flat web properties shown below in Table 4A:

**Table 4A**

| Property | Web No. 4-1 | Web No. 4-2 |
|---|---|---|
| Basis weight, gsm | 125 | 128 |
| EFD, $\mu$m | 12.4 | 12 |
| Gurley Stiffness, mg | 1181 | 405 |
| DOP Penetration at 14 cm/sec face velocity, % | 18 | 2 |
| Quality Factor, **QF,** at 14 cm/sec face velocity, % | 0.31 | 0.69 |

The webs were made into flat fold respirators like the device shown in **Fig. 1** and **Fig. 2** and evaluated using a 0.075 $\mu$m diameter NaCl particle aerosol flowing at 85 liters/min. The results are shown below in Table 4B:

**Table 4B**

| Property | Web No. 4-1 | Web No. 4-2 |
|---|---|---|
| Initial Pressure Drop, mm $H_2O$ | 4.0 | 4.7 |
| Initial Penetration, % | 2.1 | 0.37 |
| Max. Penetration, % | 10.2 | 12.6 |
| Challenge at Max. Penetration, mg | 47 | 58 |

**Claims**

1. A flat- fold personal respirator, comprising:

at least one stiff filtration panel joined to the remainder of the respirator through at least one line of demarcation,

wherein the at least one stiff filtration panel comprising:

a porous monocomponent monolayer nonwoven polymeric web that contains a plurality of charged intermingled continuous monocomponent polymeric fibers, and

wherein the polymeric web, and the polymeric fibers have the same composition;

the flat-fold personal respirator **characterized in that**

the at least one stiff filtration panel is capable of providing stiffening and filtration to the flat-fold personal respirator,

and has a basis weight or an inter-fiber bonding so that the polymeric web exhibits a Gurley Stiffness greater than 200 mg and the flat- fold personal respirator exhibits a pressure drop less than 20 mm H2O.

2. The flat- fold personal respirator according to claim 1 wherein the nonwoven web contains a bimodal mass fraction/ fiber size mixture of intermingled continuous monocomponent polymeric micro fibers and larger size fibers.

3. The flat- fold personal respirator according to claim 1 wherein the nonwoven web contains partially crystalline and partially amorphous oriented meltspun fibers.

4. The flat- fold personal respirator according to claim 1 wherein the nonwoven web has a basis weight of about 100 to about 500 gsm.

5. The flat- fold personal respirator according to claim 1 wherein the nonwoven web has a basis weight of about 150 to about 250 gsm.

6. The flat- fold personal respirator according to claim 1 wherein the nonwoven web is calendered.

7. The flat- fold personal respirator according to claim 1 wherein the nonwoven web has a Gurley Stiffness of at least about 300 mg.

8. The flat- fold personal respirator according to claim 1 further comprising an inner cover web, wherein the inner cover web and stiff filtration panel have the same polymeric composition.

9. A process for making a flat-fold personal respirator, comprising:

a) obtaining a charged web comprising a monocomponent monolayer nonwoven web that contains a plurality of electrically charged, intermingled continuous monocomponent polymeric fibers of the same polymeric composition as the charged web,

wherein the charged web having a basis weight or an inter-fiber bonding so as to exhibit a Gurley Stiffness greater than 200 mg,

b) forming at least one line of demarcation in the charged web to provide at least one stiff filtration panel that is defined at least in part by the line of demarcation; and is capable of providing stiffening and filtration to the flat-fold personal respirator,

c) adapting the stiff filtration panel into the flat-fold personal respirator that exhibits a pressure drop of less than 20 mm $H_2O$ and is capable of being folded to a substantially flat-folded configuration and unfolded to a convex open configuration.

10. The process according to claim 9 further comprising recovering waste trimmed away from the web and recycling the waste to make additional stiff filtration web.

**Patentansprüche**

1. Flach gefaltete persönliche Atemmaske, umfassend:

zumindest eine steife Filtrierungsplatte, die mit dem Rest der Atemmaske durch zumindest eine Abgrenzungslinie verbunden ist,

worin die zumindest eine steife Filtrierungsplatte Folgendes umfasst:

eine poröse aus einer Komponente und einer Schicht bestehende Vliespolymerbahn, die eine Vielzahl von geladenen vermischten kontinuierlichen einteiligen Polymerfasern enthält, und
worin die Polymerbahn und die Polymerfasern dieselbe Zusammensetzung aufweisen;
worin die flach gefaltete persönliche Atemmaske **dadurch gekennzeichnet ist, dass** die zumindest eine steife Filtrierungsplatte eine Versteifung und Filtrierung für die flach gefaltete persönliche Atemmaske vorsehen kann,
und ein Riesgewicht oder eine Faserverkettung aufweist, so dass die Polymerbahn eine Gurley-Steifheit von über 200 mg aufweist und die gefaltete persönliche Atemmaske einen Druckabfall von weniger als 20 mm $H_2O$ aufweist.

2. Flach gefaltete persönliche Atemmaske nach Anspruch 1, worin das Vlies ein bimodales Massenfraktions/Fasergrößen-Gemisch von vermischten kontinuierlichen einteiligen Polymermikrofasern und größeren Fasern enthält.

3. Flach gefaltete persönliche Atemmaske nach Anspruch 1, worin das Vlies teilweise kristalline und teilweise amorphe orientierte schmelzgesponnene Fasern enthält.

4. Flach gefaltete persönliche Atemmaske nach Anspruch 1, worin die Vliesbahn ein Riesgewicht von ca. 100 bis ca. 500 Gramm/m$^2$ aufweist.

5. Flach gefaltete persönliche Atemmaske nach Anspruch 1, worin die Vliesbahn ein Riesgewicht von ca. 150 bis ca. 250 Gramm/m$^2$ aufweist.

6. Flach gefaltete persönliche Atemmaske nach Anspruch 1, worin die Vliesbahn satiniert ist.

7. Flach gefaltete persönliche Atemmaske nach Anspruch 1, worin die Vliesbahn eine Gurley-Steifheit von zumindest ca. 300 mg aufweist.

8. Flach gefaltete persönliche Atemmaske nach Anspruch 1, ferner umfassend eine innere Abdeckbahn, worin die innere Abdeckbahn und die steife Filtrierungsplatte dieselbe Polymerzusammensetzung aufweisen.

9. Verfahren zur Herstellung einer flach gefalteten Atemmaske, umfassend:

a) Beschaffung einer geladenen Bahn, die eine aus einer Komponente und einer Schicht bestehende Vliesbahn umfasst, die eine Vielzahl von elektrisch geladenen vermischten kontinuierlichen einteiligen Polymerfasern derselben Polymerzusammensetzung wie die geladene Bahn enthält, und
worin die geladene Bahn ein Riesgewicht oder eine Faserverkettung aufweist, so dass sie eine Gurley-Steifheit von über 200 mg aufweist,
b) Bildung zumindest einer Abgrenzungslinie in der geladenen Bahn zur Bereitstellung zumindest einer Filtrierungsplatte, die zumindest teilweise von der Abgrenzungslinie definiert wird; und Versteifung und Filtrierung für die flach gefaltete persönliche Atemmaske bereitstellen kann,
c) Anpassung der steifen Filtrierungsplatte in der flach gefalteten persönlichen Atemmaske, die einen Druckabfall von weniger als 20 mm $H_2O$ aufweist und in eine im Wesentlichen flach gefaltete Konfiguration gefaltet und in eine konvexe offene Konfiguration aufgefaltet werden kann.

10. Verfahren nach Anspruch 9, ferner umfassend die Wiedergewinnung von Abfall, der von der Bahn abgeschnitten wurde, und Recycling des Abfalls zur Herstellung einer weiteren steifen Filtrierungsbahn.


**Revendications**

1. Respirateur individuel replié à plat, comprenant :

au moins un panneau de filtration rigide réuni au reste du respirateur par l'intermédiaire d'au moins une ligne de démarcation,
dans lequel ledit au moins un panneau de filtration rigide comprend :

une bande polymère poreuse non tissée, monocouche, monocomposée, qui contient une pluralité de fibres polymères monocomposées continues entremêlées chargées, et
dans lequel la bande polymère et les fibres polymères ont la même composition ;

le respirateur individuel replié à plat étant **caractérisé en ce que** ledit au moins un panneau de filtration rigide est capable de rigidifier le respirateur individuel replié à plat et de jouer un rôle de filtration dans le respirateur individuel replié à plat,

et a un grammage tel que ou comporte une liaison entre les fibres telle que la bande polymère présente une rigidité Gurley supérieure à 200 mg et le respirateur individuel replié à plat présente une chute de pression inférieure à 20 mm $H_2O$.

2. Respirateur individuel replié à plat selon la revendication 1, dans lequel la bande non tissée contient un mélange bimodal par sa fraction massique/taille de fibres constitué de microfibres polymères monocomposées continues entremêlées et de fibres de plus grande taille.

3. Respirateur individuel replié à plat selon la revendication 1, dans lequel la bande non tissée contient des fibres filées en fusion orientées qui sont en partie cristallines et en partie amorphes.

4. Respirateur individuel replié à plat selon la revendication 1, dans lequel la bande non tissée a un grammage d'environ 100 g/m$^2$ à environ 500 g/m$^2$.

5. Respirateur individuel replié à plat selon la revendication 1, dans lequel la bande non tissée a un grammage d'environ 150 g/m$^2$ à environ 250 g/m$^2$.

6. Respirateur individuel replié à plat selon la revendication 1, dans lequel la bande non tissée est calandrée.

7. Respirateur individuel replié à plat selon la revendication 1, dans lequel la bande non tissée a une rigidité Gurley d'au moins environ 300 mg.

8. Respirateur individuel replié à plat selon la revendication 1, comprenant en outre une bande de revêtement interne, la bande de revêtement interne et le panneau de filtration rigide ayant la même composition polymère.

9. Procédé de fabrication d'un respirateur individuel replié à plat, consistant à:

a) obtenir une bande chargée comprenant une bande non tissée monocouche, monocomposée, qui contient une pluralité de fibres polymères monocomposées continues entremêlées électriquement chargées, ayant la même composition polymère que la bande chargée,

la bande chargée ayant un grammage tel que ou une liaison entre les fibres telle que ladite bande chargée présente une rigidité Gurley supérieure à 200 mg,

b) former au moins une ligne de démarcation dans la bande chargée pour produire au moins un panneau de filtration rigide qui est délimité au moins en partie par la ligne de démarcation, et qui est capable de rigidifier le respirateur individuel replié à plat et de jouer un rôle de filtration dans le respirateur individuel replié à plat,

c) adapter le panneau de filtration rigide pour le mettre en place dans le respirateur individuel replié à plat qui présente une chute de pression inférieure à 20 mm $H_2O$ et qui est capable d'être replié pour acquérir une configuration sensiblement repliée à plat et d'être déplié pour acquérir une configuration ouverte convexe.

10. Procédé selon la revendication 9, consistant en outre à récupérer des déchets produits par rognage de la bande et à recycler les déchets pour produire une bande de filtration rigide additionnelle.

**Fig. 1**

**Fig. 2**

*Fig. 3*

*Fig. 4*

*Fig. 5*

*Fig. 6*

Fig. 7

Fig. 8

**Fig. 9**

**Fig. 10**

Fig. 11

*Fig. 12*

*Fig. 13*

EP 2 046 458 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4300549 A, Parker
- US 6123077 A, Bostock
- US 4920960 A, Hubbard
- US 6394090 B1, Chen
- US 2007867 A, Le Duc
- US 2265529 A, Kemp
- US 2565124 A, Durborow
- US 2634724 A, Burns
- US 2752916 A, Haliczer
- US 3664335 A, Boucher
- US 3736928 A, Andersson
- US 3971369 A, Aspelin
- US 4248220 A, White
- US 4417575 A, Hilton
- US 4419993 A, Peterson
- US 4419994 A, Hilton
- US 4600002 A, Maryyanek
- US 5322061 A, Brunson
- US 5701892 A, Bledstein
- US 5717991 A, Nozaki
- US 5724964 A, Brunson
- US 5735270 A, Bayer
- US 6474336 B1, Wolfe
- GB 2103491 A
- US 6398847 B1
- US 6397458 B1
- US 6409806 B1, Jones
- US 461136 A
- US 11461145 A
- US 69301707 A
- US 5993943 A, Bodaghi
- US 457906 A
- US 11461145 B
- US 11461192 B
- US 457899 A
- US 11461128 A
- US 11461201 A
- US 6607624 B2, Berrigan
- US 11457899 B
- US 5496507 A, Angadjivand
- US 4588537 A, Klasse
- US 5908598 A, Rousseau
- US 6562112 B2, Jones
- US 20030134515 A1, David
- US 6217691 B1
- US 6358592 B2, Vair
- US 6041782 A, Angadjivand
- US 43115206 A

**Non-patent literature cited in the description**

- **DAVIES, C. N.** The Separation of Airborne Dust and Particles. *Institution of Mechanical Engineers,* 1959
- **WENTE, VAN A.** Superfine Thermoplastic Fibers. *Industrial Engineering Chemistry,* 1956, vol. 48, 1342
- **WENTE, V. A. ; BOONE, C. D. ; FLUHARTY, E. L.** Manufacture of Superfine Organic Fibers. *Report No. 4364 of the Naval Research Laboratories,* 25 May 1954
- **WENTE, VAN A.** superfine Thermoplastic Fiber. *Industrial and Engineering Chemistry,* 1956, vol. 48 (8), 1342-1346
- *Naval Research Laboratory Report 111437,* 15 April 1954